(19) Europäisches Patentamt / European Patent Office / Office européen des brevets

(11) **EP 4 084 963 B1**

(12) **EUROPÄISCHE PATENTSCHRIFT**

(45) Veröffentlichungstag und Bekanntmachung des Hinweises auf die Patenterteilung:
**02.04.2025 Patentblatt 2025/14**

(21) Anmeldenummer: **20830068.1**

(22) Anmeldetag: **16.12.2020**

(51) Internationale Patentklassifikation (IPC):
**B42D 25/324** (2014.01)    **B42D 25/373** (2014.01)
**B42D 25/351** (2014.01)    **B42D 25/29** (2014.01)
**B42D 25/425** (2014.01)    **B42D 25/445** (2014.01)
**G02B 5/18** (2006.01)    **G02B 5/22** (2006.01)
**G02B 27/42** (2006.01)

(52) Gemeinsame Patentklassifikation (CPC):
**B42D 25/324; B42D 25/29; B42D 25/351;
B42D 25/373; B42D 25/425; B42D 25/445;
G02B 5/09**

(86) Internationale Anmeldenummer:
**PCT/EP2020/025580**

(87) Internationale Veröffentlichungsnummer:
**WO 2021/136588 (08.07.2021 Gazette 2021/27)**

(54) **OPTISCH VARIABLES SICHERHEITSELEMENT**

OPTICALLY VARIABLE SECURITY ELEMENT

ÉLÉMENT DE SÉCURITÉ OPTIQUEMENT VARIABLE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **03.01.2020 DE 102020000031**

(43) Veröffentlichungstag der Anmeldung:
**09.11.2022 Patentblatt 2022/45**

(73) Patentinhaber: **Giesecke+Devrient Currency
Technology GmbH
81677 München (DE)**

(72) Erfinder:
- **SCHERER, Kai Herrmann
  82491 Grainau (DE)**
- **SATTLER, Tobias
  83607 Holzkirchen (DE)**

(74) Vertreter: **Giesecke+Devrient IP
Prinzregentenstraße 161
81677 München (DE)**

(56) Entgegenhaltungen:
EP-A1- 3 216 620    EP-A1- 3 415 964
CH-A5- 691 750    US-A1- 2019 152 251

**Beschreibung**

Die Erfindung betrifft ein optisch variables Sicherheitselement mit einem mehrfarbigen reflektiven Flächenbereich zur Absicherung von Wertgegenständen. Die Erfindung betritt auch ein Verfahren zum Herstellen eines solchen Sicherheitselements sowie einen mit einem solchen Sicherheitselement ausgestatteten Datenträger.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens, eines selbsttragenden Transferelements oder auch in Form eines direkt auf ein Wertdokument aufgedruckten Merkmalsbereichs ausgebildet sein.

Eine besondere Rolle bei der Echtheitsabsicherung spielen Sicherheitselemente mit betrachtungswinkelabhängigem oder dreidimensionalem Erscheinungsbild, da diese selbst mit modernsten Kopiergeräten nicht reproduziert werden können. Dazu sind die Sicherheitselemente mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/oder ein anderes graphisches Motiv zeigen. Im Stand der Technik sind dabei als optisch variable Effekte beispielsweise Bewegungseffekte, Pumpeffekte, Tiefeneffekte oder Flipeffekte beschrieben, die mit Hilfe von Hologrammen, Mikrolinsen oder Mikrospiegeln realisiert werden.

EP 3415964 A1 betrifft ein optisches Element mit Schichten aus unterschiedlichen Brechungsindizes. US 2019/0152251 AI betrifft ein Verfahren zur Herstellung eines Sicherheitselements mit einer mikro-optischen (Linsen-) Schicht und einer darunter angeordneten Bildschicht. EP 3216620 A1 betrifft ein Sicherheitselement mit gerichtet reflektierenden Facetten, wobei in einem Teilbereich die Orientierung der Facetten zufällig variiert und in einem anderen Teilbereich die Orientierung identisch sind. CH 691 750 A5 betrifft einen optischen Informationsträger mit einer ersten Reliefstruktur auf der Oberseite einer Folie und einer zweiten Reliefstruktur auf der Unterseite der Folie. In einer Deckschicht der ersten und der zweiten Reliefstruktur können Öffnungen vorliegen, so dass abhängig vom Betrachtungswinkel die Deckschichten oder ein darunter liegendes Substrat sichtbar sind.

Ausgehend davon liegt der Erfindung die Aufgabe zugrunde, die Fälschungssicherheit und die visuelle Attraktivität gattungsgemäßer optisch variabler Sicherheitselemente weiter zu erhöhen. Insbesondere sollen optisch variable Sicherheitselemente mit visuell attraktiven Farbwechseleffekten beim Wechsel des Betrachtungswinkels bereitgestellt werden, die idealerweise einfach und kostengünstig herstellbar sind.

Diese Aufgabe wird durch die Merkmale der unabhängigen Ansprüche gelöst. Weiterbildungen der Erfindung sind Gegenstand der abhängigen Ansprüche.

Die Erfindung enthält zur Lösung der genannten Aufgabe ein in Anspruch 1 definiertes optisch variables Sicherheitselement.

Es versteht sich, dass der Farbeindruck der ersten Farbbeschichtung und der Farbeindruck der zweiten Farbbeschichtung verschieden sind, so dass sich durch diese beiden Farbeindrücke und den Farbeindruck der additiven Mischfarbe drei unterschiedliche Farbeindrücke und damit ein Trikolorbereich ergeben. Die drei genannten Farbeindrücke entstehen für den Betrachter bei Betrachtung von der Betrachtungsseite bzw. Oberseite unter den verschiedenen Betrachtungswinkeln. Die drei Farbeindrücke könnten auch als reflektive Farbeindrücke bzw. als Aufsichtsfarbeindrücke bezeichnet werden.

Mit besonderem Vorteil sind die höher liegende Reliefstruktur und/oder die tiefer liegende Reliefstruktur durch Mikrospiegelanordnungen mit gerichtet reflektierenden Mikrospiegeln gebildet. Die Mikrospiegel sind dabei insbesondere durch nicht-diffraktiv wirkende Spiegel gebildet und erzeugen keine Farbaufspaltung. Vorzugsweise können dabei plane Spiegel, Hohlspiegel und/oder fresnelartige Spiegel zum Einsatz kommen. Die lateralen Abmessungen der Mikrospiegel liegen dabei vorteilhaft unterhalb von 20 $\mu$m, bevorzugt unterhalb von 10 $\mu$m, vorzugsweise aber andererseits auch oberhalb von 2 $\mu$m, insbesondere oberhalb von 3 $\mu$m oder sogar oberhalb von 5 $\mu$m. Grundsätzlich können anstelle von Mikrospiegeln auch andere Reliefstrukturen, insbesondere geprägte Fresnellinsen, Hohlspiegel, Hologrammstrukturen, Nanostrukturen oder diffraktive geblazte Gitter eingesetzt werden.

In einer vorteilhaften Weiterbildung der Erfindung enthalten die höher liegende Mikrospiegelanordnung und die tiefer liegende Mikrospiegelanordnung Mischbereiche mit zumindest zwei Mikrospiegelorientierungen, in denen jeweils ein festgelegter Anteil der Mikrospiegel in jede der Mikrospiegelorientierungen ausgerichtet ist.

Die Mischbereiche können zumindest in Teilbereichen genau zwei Mikrospiegelorientierungen enthalten, in denen jeweils ein festgelegter Anteil der Mikrospiegel in jede der beiden Mikrospiegelorientierungen ausgerichtet ist.

Mit Vorteil sind die Mischbereiche der höher liegenden Mikrospiegelanordnung (nachfolgend: höher liegende Mischbereiche) und die Mischbereiche der tiefer liegenden Mikrospiegelanordnung (nachfolgend: tiefer liegende Mischbereiche) zumindest teilweise übereinander angeordnet.

Zumindest ein Trikolorbereich ist vorteilhaft durch zwei übereinander liegende Mischbereiche gebildet, wobei

- ein tiefer liegender Mischbereich einen ersten Anteil $AT_1$ von Mikrospiegeln enthält, die aus dem ersten genannten Betrachtungswinkel im Glanzwinkel stehen, und einen zweiten Anteil $AT_2$ von Mikrospiegeln enthält, die aus dem dritten genannte Betrachtungswinkel im Glanzwinkel stehen, und

- ein höher liegender Mischbereich einen ersten Anteil $AH_1$ von Mikrospiegeln enthält, die aus dem zweiten genannten Betrachtungswinkel im Glanzwinkel stehen, und einen zweiten Anteil $AH_2$ von Mikrospiegeln enthält, die aus dem dritten genannten Betrachtungswinkel im Glanzwinkel stehen,

- so dass der Farbeindruck des Mischbereichs aus dem ersten Betrachtungswinkel durch die erste Farbbeschichtung und den Anteil $AT_1$ von Mikrospiegeln des tiefer liegenden Mischbereichs bestimmt wird, aus dem zweiten Betrachtungswinkel durch die zweite Farbbeschichtung und den Anteil $AH_1$ von Mikrospiegeln des höher liegenden Mischbereichs bestimmt wird, und aus dem dritten Betrachtungswinkel durch eine Kombination der ersten Farbbeschichtung und den Anteil $AT_2$ von Mikrospiegeln des tiefer liegenden Mischbereichs mit der zweiten Farbbeschichtung und dem Anteil $AH_2$ von Mikrospiegeln des höher liegenden Mischbereichs bestimmt wird, und dadurch eine Trikolorbereich bildet.

Die Anteile $AT_1$, $AT_2$, $AH_1$, $AH_2$, die erste und zweite Farbbeschichtung, und die Rasterung der zweiten Farbbeschichtung sind zweckmäßig aufeinander abgestimmt, um ein vorgegebenes Helligkeitsverhältnis der Farbeindrücke aus dem ersten, zweiten und dritten Betrachtungswinkel zu erzeugen. Insbesondere können diese Elemente so aufeinander abgestimmt sein, dass die Helligkeiten der Farbeindrücke aus dem ersten, zweiten und dritten Betrachtungswinkel im Wesentlichen gleich sind.

Ist beispielsweise die Reflektivität der ersten und zweiten Farbbeschichtung im Wesentlichen gleich und beträgt die Flächendeckung des Rasters der zweiten Farbbeschichtung 50%, so können gleiche Helligkeiten der Farbeindrücke aus dem ersten, zweiten und dritten Betrachtungswinkel durch eine Wahl der Anteile

$$AT_1 = AH_1 = AT_2 + AH_2$$

erhalten werden. Anderseits können unterschiedliche Reflexionshelligkeiten der ersten und zweiten Farbbeschichtung durch entsprechende Wahl der Anteile oder auch durch eine entsprechende Flächendeckung des Rasters nach Wunsch ausgeglichen oder verstärkt werden und somit praktische beliebige Helligkeits-Verhältnisse erzeugt werden.

In einer vorteilhaften Gestaltung ergänzen sich die Anteile $AT_1$ und $AT_2$, bzw. die Anteil $AH_1$ und $AH_2$ jeweils zu 100%. In anderen Gestaltungen ist die Summer der Anteile kleiner als 100%, beispielsweise weil ein weiterer Anteil von Mikrospiegeln aus einem anderen Betrachtungswinkel im Glanzwinkel steht oder weil ein Anteil von Mikrospiegeln deaktiviert ist.

Die Mikrospiegel unterschiedlicher Orientierung in den Mischbereichen sind vorteilhaft ineinander verschachtelt, und somit nicht in großflächigen gleichorientierten Bereichen angeordnet. Die Mikrospiegel unterschiedlicher Orientierung können in den Mischbereichen dabei regelmäßig oder unregelmäßig (statistisch) angeordnet sein. Beispielsweise kann bei zwei unterschiedlichen Orientierungen $O_1$, $O_2$ mit einem Anteil $A_1 : A_2$ von 2:1, regelmäßig jeder dritte Spiegel mit Orientierung $O_2$, die restlichen Spiegel mit Orientierung $O_1$ ausgebildet werden. Alternativ kann für jede Position zufällig mit Wahrscheinlichkeit 2/3 die Orientierung $O_1$ und mit Wahrscheinlichkeit 1/3 die Orientierung $O_2$ gewählt werden, um eine unregelmäßige Anordnung zu erreichen.

Die Abmessungen der Rasterelemente und/oder Rasterzwischenräume liegen bevorzugt in einer oder beiden lateralen Richtungen sogar unterhalb von 120 $\mu$m, vorzugsweise zwischen 20 $\mu$m und 100 $\mu$m, insbesondere zwischen 20 $\mu$m und 60 $\mu$m.

Das Raster der zweiten Farbbeschichtung ist in vorteilhaften Gestaltungen mit einer konstanter Flächendeckung durch die Rasterelemente ausgebildet, welche zweckmäßig zwischen 30% und 70%, vorzugsweise zwischen 40% und 60%, insbesondere bei etwa 50% liegt.

In anderen, ebenfalls vorteilhaften Gestaltungen ist das Raster der zweiten Farbbeschichtung mit einer ortsabhängig variierenden Flächendeckung durch die Rasterelemente ausgebildet. Zweckmäßig kann dabei vorgesehen sein, dass die Flächendeckung in einer Raumrichtung kontinuierlich zunimmt oder kontinuierlich abnimmt, oder bis zu einem Maximalwert kontinuierlich zunimmt und dann kontinuierlich abnimmt, oder bis zu einem Minimalwert kontinuierlich abnimmt und dann kontinuierlich zunimmt.

Die zweite Farbbeschichtung enthält in dem Merkmalsbereich vorteilhaft auch Teilbereiche, die laterale Abmessungen von mehr als 140 $\mu$m aufweisen. Alternativ oder zusätzlich kann die zweite Farbbeschichtung in dem Merkmalsbereich auch mit Aussparungen ausgebildet sein, die laterale Abmessungen von mehr als 140 $\mu$m aufweisen. Bevorzugt betragen die lateralen Abmessungen zumindest eines solchen Teilbereichs und/oder zumindest einer solchen Aussparungen sogar mehr als 250 $\mu$m, vorzugsweise mehr als 500 $\mu$m und insbesondere mehr als 1 mm.

Die erste Farbbeschichtung der tiefer liegenden Reliefstruktur ist im Merkmalsbereich mit Vorteil opak ausgebildet. Alternativ oder zusätzlich ist die genannte erste Farbbeschichtung im Merkmalsbereich vollflächig, also ohne Aussparungen ausgebildet.

Die erste und/oder zweite Farbbeschichtung ist bevorzugt eine reflektierende Farbbeschichtung. Eine oder beide Farbbeschichtungen können insbesondere durch Metallisierungen, beispielsweise aus Aluminium, Silber oder einer Legierung, etwa aus Kupfer und Aluminium, durch Dünnschichtaufbauten, insbesondere farbkippende Dünnschichtaufbauten, Gold-Blau oder Silizium-Aluminium-Dünnschichten gebildet sein. Die erste und/oder zweite Farbbeschichtung kann auch ein lasierendes Bild aus mehreren lasierenden Farben darstellen, das mit einer Verspiegelung, beispielsweise aus Aluminium, hinterlegt ist. Auch Lumineszenzfarben, insbesondere Fluoreszenzfarben mit einer metallischen Verspiegelung kommen als Farbbeschichtungen in Betracht. Die erste und/oder zweite Farbbeschichtung kann auch durch Strukturfarben, insbesondere durch Nano- und Binärstrukturen, gebildet sein, welche auf oder in die Mikrospiegel einer Mikrospiegelanordnung geprägt sind. Schließlich kommen auch Nanopartikelfarben als Farbbeschichtung in Betracht, wie etwa Gold-Blau-Partikel, verschiedene Effektpigmente, farbkippende Pigmente oder Supersilber.

Die Ausbildung der höher liegenden Reliefstruktur, insbesondere die Ausrichtung der Mikrospiegel der höher liegenden Mikrospiegelanordnung und/oder die Ausbildung der tiefer liegenden Reliefstruktur, insbesondere die Ausrichtung der Mikrospiegel der tiefer liegenden Mikrospiegelanordnung variiert mit Vorteil ortsabhängig, um ein jeweils vorgegebenes Motiv, insbesondere ein dreidimensional wirkendes Motiv oder ein Bewegungsmotiv, zu erzeugen. Die Ausrichtung der Mikrospiegel ist dabei frei wählbar und im Wesentlichen nur durch das vorgegebene Motiv, nicht aber durch die Ausrichtung benachbarter Mikrospiegel bestimmt.

Der Merkmalsbereich kann nur einen einzigen Trikolorbereich enthalten, kann mit Vorteil aber auch mehrere Trikolorbereiche enthalten, insbesondere mehrere Trikolorbereiche mit gleichem Farbwechsel oder mehrere Trikolorbereiche mit unterschiedlichen Farbwechseln beim Wechsel der Betrachtungsrichtungen.

Der Mischfarbeindruck in dem oder in den Trikolorbereichen ergibt sich jeweils durch lokale additive Farbmischung der Farbeindrücke der ersten und zweiten Farbbeschichtung. Um maximalen Kontrast zu erhalten, werden für die ersten und zweiten Farbbeschichtung vorteilhaft Grundfarben, beispielsweise Blau und Grün, Grün und Rot oder Blau und Rot verwendet. Auch Farben, die bei additiver Farbmischung Weiß ergeben, können vorteilhaft eingesetzt werden, um beispielsweise Bereiche abhängig vom Blickwinkel in ihrer Wahrnehmung herabzusetzen.

Durch die kleinen Abmessungen der Rasterelemente und Rasterzwischenräume unterhalb von 140 μm sind die Farbeindrücke der ersten und zweiten Farbbeschichtung in den gerasterten Bereichen nicht getrennt wahrnehmbar, sondern der Betrachter sieht jeweils eine Mischfarbe, die nicht nur von den Farben der beteiligten Farbbeschichtungen selbst und dem Orientierung der Mikrospiegel abhängt, sondern auch von der lokalen Flächendeckung des Rasters, welche eine Wichtung der beiden Farbeindrücke erzeugt. Stehen beispielsweise die Mikrospiegel der höher und tiefer liegenden Mikrospiegelanordnung in einem Bereich beide im Glanzwinkel, so ergeben die Farben Rot und Grün für die erste bzw. zweite Farbbeschichtung bei einer Flächendeckung des Rasters der zweiten Farbbeschichtung von 50% die Mischfarbe Gelb, während sich bei einer Flächendeckung von 20:80 (also 20% Flächendeckung der zweiten, grünen Farbbeschichtung und 80% Zwischenraumanteil) ein oranger Farbton ergibt.

In einer zweckmäßigen Ausgestaltung enthält der reflektive Flächenbereich genau zwei Prägestrukturbereiche, die jeweils auf einer bestimmten Höhenstufe angeordnet sind. Die Prägestrukturbereiche sind vorteilhaft durch eine maximale Ganghöhe charakterisiert, wobei der Abstand benachbarter Höhenstufen in z-Richtung größer als die maximale Ganghöhe des tiefer liegenden Prägestrukturbereichs ist und bevorzugt zwischen 150% und 750%, besonders bevorzugt zwischen 200% und 500% der maximalen Ganghöhe des tiefer liegenden Prägestrukturbereichs liegt.

Gemäß einer weiteren Variante kann vorgesehen sein, dass in z-Richtung auf einer Höhenstufe zwischen den beiden Reliefstrukturen eine lichtdurchlässige farbige Flachstruktur angeordnet ist, die beiden Reliefstrukturen und die Flachstruktur in einem Überlappungsbereich überlappen, und die zweite Farbbeschichtung der höher liegenden Reliefstruktur in dem Überlappungsbereich zumindest eine Aussparung aufweist, in der bei Betrachtung des Sicherheitselements die tiefer liegende Reliefstruktur mit der kombinierten Farbwirkung der farbigen Flachstruktur und der ersten Farbbeschichtung in Erscheinung tritt.

Die Flachstruktur kann dabei durch eine Kaschierlackschicht, eine Primerschicht oder eine gedruckte Farbschicht gebildet sein und/oder sie kann als Farbmittel farbgebende Pigmente und/oder einen Farbstoff enthalten.

Bei einer anderen vorteilhaften Weiterbildung zeigt das Sicherheitselement bei Betrachtung von einer Oberseite und einer gegenüberliegenden Unterseite jeweils ein unterschiedliches visuelles Erscheinungsbild zeigt, wobei auch hier in z-Richtung auf einer Höhenstufe zwischen den beiden Reliefstrukturen eine lichtdurchlässige farbige Flachstruktur angeordnet ist, wobei die beiden Reliefstrukturen und die Flachstruktur in einem Überlappungsbereich überlappen. Die zweite (obere) Farbbeschichtung weist in dem Überlappungsbereich zumindest eine Aussparung auf, in der bei Betrachtung des Sicherheitselements von der Oberseite her die tiefer liegende Reliefstruktur mit der kombinierten Farbwirkung zumindest der lichtdurchlässigen farbigen Flachstruktur und der ersten (unteren) Farbbeschichtung in Erscheinung tritt. Weiter weist die erste (untere) Farbbeschichtung in dem Überlappungsbereich zumindest eine Aussparung auf, in der bei Betrachtung des Sicherheitselements von der Unterseite her die höher liegende Reliefstruktur mit der kombinierten Farbwirkung zumindest der lichtdurchlässigen farbigen Flachstruktur und der zweiten (oberen) Farbbeschichtung in Erscheinung tritt.

In einer vorteilhaften Ausgestaltung sind die Aussparungen in der oberen Farbbeschichtung und die Aussparungen in der unteren Farbbeschichtung überlappungsfrei angeordnet. Dies bedeutet, dass in den Aussparungen der oberen Farbbeschichtung jeweils die untere Farbbeschichtung und in den Aussparungen der unteren Farbbeschichtung jeweils die obere Farbbeschichtung sichtbar ist. Eine Durchsicht durch den Flächenbereich durch fluchtende Aussparungen in beiden Farbschichten ist in dieser Ausgestaltung daher nicht möglich.

In anderen Ausgestaltungen ist vorgesehen, dass neben überlappungsfrei angeordneten Aussparungen in der oberen und unteren Farbbeschichtung auch einander überlappende Aussparungen in den beiden Farbbeschichtungen vorgesehen sind, die aus einer Betrachtungsrichtung eine Durchsicht durch den Flächenbereich ermöglichen. Die genannte Betrachtungsrichtung kann eine senkrechte Betrachtungsrichtung, aber auch eine schräge Betrachtungsrichtung bis einem typischen Winkel von bis zu 60° sein.

Die einander überlappenden Aussparungen können insbesondere in Form eines Punktrasters angeordnet sein, das Zeichen, ein Muster oder eine Codierung bildet. Die Punktgröße ist dabei vorteilhaft so klein gewählt, dass eine Durchsicht durch die überlappenden Aussparungen nur in einem engen Winkelbereich von einigen Grad möglich ist. Das von dem Punktraster gebildete Motiv ist daher nur in einem engen Winkelbereich sichtbar stellt eine zusätzliche Echtheitsabsicherung des Sicherheitselements bereit. Der Durchmesser der Punkt kann insbesondere unterhalb von 1 mm oder sogar unterhalb von 300 µm liegen.

Die überlappungsfrei angeordneten Aussparungen in der oberen und unteren Farbbeschichtung sind in einer zweckmäßigen Ausgestaltung verschachtelt angeordnet, sie wechseln also einander entlang der Flächenausdehnung des Flächenbereichs in einem Verschachtelungsbereich mehrfach ab. Innerhalb des Verschachtelungsbereichs ist ein Farbwechsel sowohl bei Betrachtung von der Oberseite als auch der Unterseite sichtbar.

In einer vorteilhaften Ausgestaltung ist vorgesehen, dass die Farbwirkungen der Reliefstrukturen, der Farbbeschichtungen und der Flachstruktur so aufeinander abgestimmt sind, dass das Sicherheitselement bei Betrachtung von der Oberseite außerhalb der Aussparungen der oberen Farbbeschichtung einen ersten Farbeindruck und innerhalb der Aussparungen einen dazu unterschiedlichen zweiten Farbeindruck zeigt. Weiter zeigt das Sicherheitselement bei Betrachtung von der Unterseite außerhalb der Aussparungen der unteren Farbbeschichtung einen dritten Farbeindruck und innerhalb der Aussparungen einen dazu unterschiedlichen vierten Farbeindruck. Als besonders vorteilhaft hat sich herausgestellt, wenn die Farbwirkungen der Reliefstrukturen, der Farbbeschichtungen und der Flachstruktur so aufeinander abgestimmt sind, dass alle vier Farbdrücke voneinander verschieden sind. Die Farbwirkung der Reliefstrukturen umfasst insbesondere die Farbwirkung von Lackschichten, in der die Reliefstrukturen abgeformt sind und die Farbwirkung von Decklackschichten der Reliefstrukturen.

Der allgemeine Begriff "Farbwirkung" umfasst dabei sowohl Farbe als auch Farblosigkeit. Der Begriff "Farbeindruck" wird für den Farb-Gesamteindruck verwendet, den eine oder mehrere farbwirkende Elemente erzeugen. Konkret erzeugt beispielsweise die Kombination einer farblosen transparenten Prägelackschicht (farblose Farbwirkung) mit einer gelb lasierenden Flachstruktur (gelbe Farbwirkung) und einer hinterlegten Aluminiummetallisierung (silbrig glänzende Farbwirkung) einen gelb glänzenden Farbeindruck. Wird anstellt des farblosen Prägelacks ein lasierend blau eingefärbter Prägelack verwendet, ergibt sich durch die Farbmischung ein grün glänzender Farbeindruck.

Mit Vorteil ist die lichtdurchlässige farbige Flachstruktur durch eine Kaschierlackschicht, beispielsweise eine lasierend eingefärbte Kaschierlackschicht, eine eingefärbte Primerschicht oder eine gedruckte Farbschicht gebildet. Als Farbmittel kann die lichtdurchlässige farbige Flachstruktur insbesondere farbgebende Pigmente und/oder einen Farbstoff enthalten.

Die Erfindung enthält weiter einen in Anspruch 14 definierten Datenträger mit einem Sicherheitselement der beschriebenen Art. Bei dem Datenträger kann es sich insbesondere um ein Wertdokument, wie eine Banknote, insbesondere eine Papierbanknote, eine Polymerbanknote oder eine Folienverbundbanknote, um eine Aktie, eine Anleihe, eine Urkunde, einen Gutschein, einen Scheck, eine hochwertige Eintrittskarte, aber auch um eine Ausweiskarte, wie etwa eine Kreditkarte, eine Bankkarte, eine Barzahlungskarte, eine Berechtigungskarte, einen Personalausweis oder eine Passpersonalisierungsseite handeln. Die tiefer liegende Reliefstruktur liegt dabei in der Regel näher an einer Oberfläche des Datenträgers als die höher liegende Reliefstruktur, welche näher am Auge des Betrachters liegt. Das Sicherheitselement ist in einer zweckmäßigen Variante in einem opaken Bereich des Datenträgers angeordnet.

Die Erfindung enthält auch ein in Anspruch 15 definiertes Verfahren zum Herstellen eines optisch variablen Sicherheitselements.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:

Fig. 1    eine schematische Darstellung einer Banknote mit einem erfindungsgemäßen optisch variablen Sicherheitselement,

Fig. 2    schematisch einen Ausschnitt eines erfindungsgemäßen Sicherheitselements im Querschnitt,

Fig. 3    in (a) bis (e) einige konkrete vorteilhafte Ausgestaltungen des Rasters der Farbbeschichtung der höher liegenden Mikrospiegelanordnung in Aufsicht,

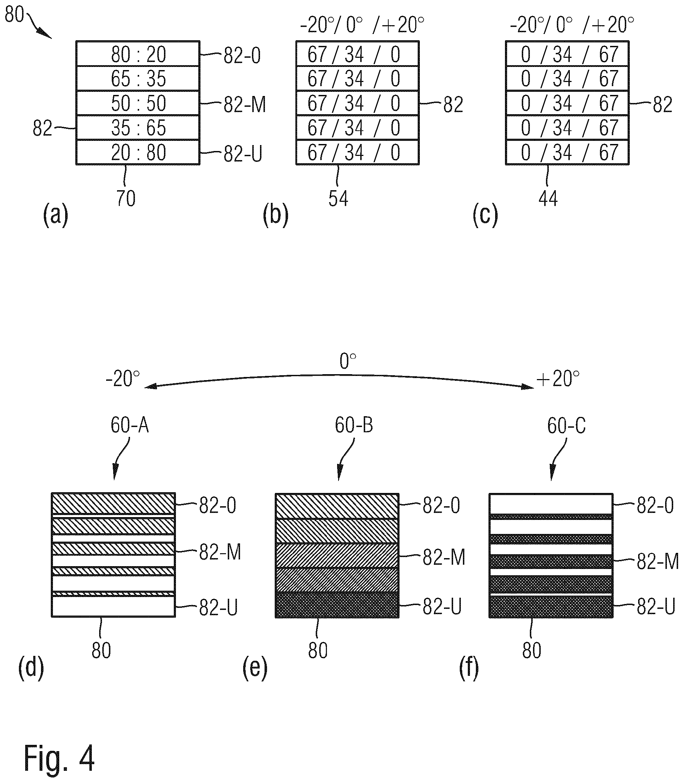

Fig. 4    die Auslegung eines Sicherheitselements nach einem weiteren Ausführungsbeispiel der Erfindung, wobei (a) das Flächenverhältnis von Rasterelementen zu Rasterzwischenräumen der Farbbeschichtung der höher liegenden Mikrospiegelanordnung in 5 Teilbereichen angibt, (b) den Prozentanteil von Mikrospiegeln der höher liegenden Mikrospiegelanordnung in jedem der Teilbereiche angibt, die in den jeweiligen Glanzwinkel reflektieren, (c) den Prozentanteil von Mikrospiegeln der tiefer liegenden Mikrospiegelanordnung in jedem der Teilbereiche angibt, die in den jeweiligen Glanzwinkel reflektieren, und (d) bis (f) das Erscheinungsbild des Sicherheitselements aus drei Betrachtungsrichtungen -20°, 0°, +20° illustrieren,

Fig. 5    die Auslegung eines Sicherheitselements nach einem weiteren Ausführungsbeispiel der Erfindung in einer Darstellung wie in Fig. 4,

Fig. 6    die Auslegung eines Sicherheitselements nach noch einem weiteren Ausführungsbeispiel der Erfindung in einer Darstellung wie in Fig. 4,

Fig. 7    in (a) bis (c) das Erscheinungsbild eines Sicherheitselements nach einem weiteren Ausführungsbeispiel der Erfindung bei drei Kippstellungen, und

Fig. 8    in (a) bis (c) das Erscheinungsbild eines Sicherheitselements nach noch einem weiteren Ausführungsbeispiel der Erfindung aus drei Betrachtungswinkeln.

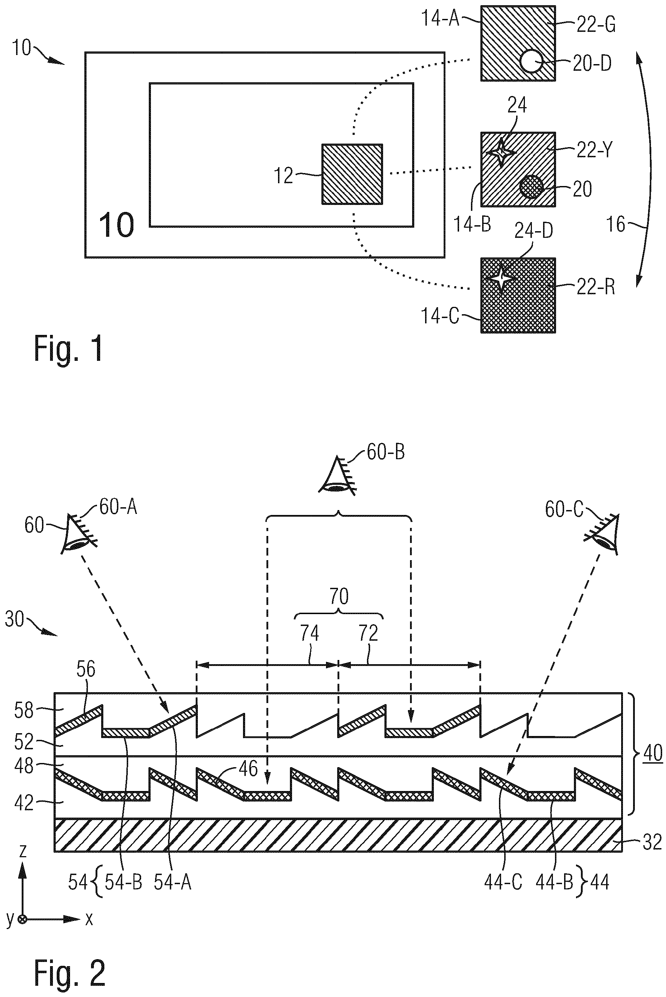

Die Erfindung wird nun am Beispiel von Sicherheitselementen für Banknoten erläutert. Figur 1 zeigt dazu eine schematische Darstellung einer Banknote 10 mit einem optisch variablen Sicherheitselement 12, das in Form eines aufgeklebten Transferelements ausgebildet ist. Es versteht sich allerdings, dass die Erfindung nicht auf Transferelemente und Banknoten beschränkt ist, sondern bei allen Arten von Sicherheitselementen eingesetzt werden kann, beispielsweise bei Etiketten auf Waren und Verpackungen oder bei der Absicherung von Dokumenten, Ausweisen, Pässen, Kreditkarten, Gesundheitskarten und dergleichen. Bei Banknoten und ähnlichen Dokumenten kommen neben Transferelementen (wie Patch mit oder ohne eigene Trägerschicht) beispielsweise auch Sicherheitsfäden oder Sicherheitsstreifen in Betracht.

Das in Fig. 1 dargestellte Sicherheitselement 12 zeigt dem Betrachter einen scharfen Farb- und Effektwechsel mit drei unterschiedlichen Farbeindrücken beim Kippen der Banknote 10.

In senkrechter Aufsicht bietet das Sicherheitselement dem Betrachter ein dreifarbiges leuchtendes Erscheinungsbild 14-B, das einen leuchtend roten Punkt 20 und einen leuchtend grünen Stern 24 vor einem leuchtend gelbem Hintergrund 22-Y zeigt. Kippt der Betrachter die Banknote und betrachtet das Sicherheitselement 12 schräg von oben, so zeigt das Sicherheitselement ein verändertes Erscheinungsbild 14-A, bei dem der grüne Stern 24 mit dem nunmehr ebenfalls grünen Hintergrund 22-G zu einem gleichmäßigen leuchtend grünen Flächenbereich verschmolzen ist, und zudem der Punkt 20-D farblos dunkel erscheint. Kippt der Betrachter die Banknote in die andere Richtung und betrachtet das Sicherheitselement 12 schräg von unten, so zeigt das Sicherheitselement noch ein anderes Erscheinungsbild 14-C, bei dem einerseits der rote Punkt 20 mit dem nunmehr ebenfalls roten Hintergrund 22-R zu einem gleichmäßigen leuchtend roten Flächenbereich verschmolzen ist, und anderseits der Stern 24-D dunkel erscheint.

Im Hintergrundbereich 22 wechselt der Farbeindruck des Sicherheitselements bei der Änderung der Betrachtungsrichtung von Grün (22-G) über Gelb (22-Y) zu Rot (22-R) und bildet daher einen Trikolorbereich. Der gelbe Farbeindruck der senkrechten Betrachtungsrichtung ergibt sich dabei durch additive Farbmischung des grünen und roten Farbtons der schrägen Betrachtungsrichtung, wie weiter unten genauer erläutert.

Der besondere Aufbau erfindungsgemäßer optisch variabler Sicherheitselemente wird nun mit Bezug auf Fig. 2 näher erläutert, die ein Sicherheitselement 30 nach einem ersten Ausführungsbeispiel der Erfindung schematisch im Querschnitt zeigt.

Bei dem ersten Ausführungsbeispiel der Fig. 2 weist das Sicherheitselement 30 ein einfacheres dreifarbiges Erscheinungsbild als das Sicherheitselement der Fig. 1 auf, der Flächenbereich des Sicherheitselements 30 zeigt nämlich bei schräger Betrachtungsrichtung von links (Betrachtungsposition 60-A) ein einheitlich grünes Erscheinungsbild, bei schräger Betrachtungsrichtung von rechts (Betrachtungsposition 60-C) ein einheitlich rotes Erscheinungsbild und bei senkrechter Betrachtung von oben (Betrachtungsposition 60-B) ein einheitlich gelbes Erscheinungsbild.

In diesem Ausführungsbeispiel bildet der gesamte Flächenbereich des Sicherheitselements 30 einen Trikolorbereich, dessen Farbeindruck beim Kippen des Sicherheitselements 30 von links (beispielsweise -20° bezogen auf die Senkrechte) über die Senkrechte (Winkel 0°) nach rechts (Winkel +20° bezogen auf die Senkrechte) von Grün über Gelb zu Rot wechselt und dabei jeweils praktisch übergangslos zwischen zwei Erscheinungsbildern springt.

Das Sicherheitselement 30 enthält einen flächigen Träger 32, dessen Flächenausdehnung eine x-y-Ebene und eine darauf senkrecht stehende z-Achse definiert.

Auf dem Träger 32 ist ein mehrfarbiger reflektiver Flächenbereich 40 angeordnet, der zwei Reliefstrukturbereiche 44, 54 enthält, die in z-Richtung in zwei bestimmten, unterschiedlichen Höhenstufen angeordnet sind. Da das Sicherheitselement der Fig. 2 auf eine Betrachtung in Reflexion aus der positiven z-Richtung ausgelegt ist und die Höhenstufen der Reliefstrukturbereiche 44 von der Unterseite des Sicherheitselements 30 angegeben werden, wird die näher am Träger 32 liegende Reliefstruktur 44 als die tiefer liegende Reliefstruktur und die näher am Betrachter 60 liegende Reliefstruktur 54 als die höher liegende Reliefstruktur bezeichnet.

Die beiden Reliefstrukturen stellen im Ausführungsbeispiel jeweils Mikrospiegelprägungen bzw. Mikrospiegelanordnungen 44, 54 dar, welche jeweils aus einer Vielzahl von gegen die x-y-Ebene geneigten Mikrospiegeln gebildet sind.

Die lokalen Neigungswinkel der Mikrospiegel sind dabei im ersten Ausführungsbeispiel so gewählt, dass in der tiefer liegenden Mikrospiegelanordnung 44 gerade 2/3 der Mikrospiegel (Mikrospiegel 44-C) einen Neigungswinkel von +10° und damit bei senkrechtem Lichteinfall einen Glanzwinkel von +20° haben, und 1/3 der Mikrospiegel (Mikrospiegel 44-B) einen Neigungswinkel von 0° und damit bei senkrechtem Lichteinfall auch einen Glanzwinkel von 0° haben.

In der höher liegenden Mikrospiegelanordnung 54 weisen 2/3 der Mikrospiegel (Mikrospiegel 54-A) einen Neigungswinkel von -10° auf und haben damit bei senkrechtem Lichteinfall einen Glanzwinkel von -20°, während 1/3 der Mikrospiegel (Mikrospiegel 54-B) einen Neigungswinkel von 0° und damit auch einen Glanzwinkel von 0° haben.

Die Mikrospiegelanordnungen 44, 54 sind weiter mit Farbbeschichtungen 46, 56 versehen, die jeweils durch eine lasierende Farbschicht mit einer hinterlegten Metallisierung gebildet sind. Die tiefer liegende Mikrospiegelanordnung 44 ist dabei mit einer durchgehenden, rot reflektierenden Farbbeschichtung 46 versehen, während auf der höher liegenden Mikrospiegelanordnung 54 eine grün reflektierende Farbbeschichtung 56 angeordnet ist, welche Aussparungen 74 aufweist, die dem Betrachter 60 trotz der durchgehenden Mikrospiegelprägung 54 in den ausgesparten Teilbereichen 74 den Blick auf die tiefer liegende Mikrospiegelanordnung ermöglichen.

Konkret ist die Farbbeschichtung 56 der höher liegenden Mikrospiegelanordnung 54 in Form eines regelmäßigen Rasters 70 aus Rasterelementen 72 und Rasterzwischenräumen 74 ausgebildet, wobei die Rasterelemente 72 und Rasterzwischenräume 74 ein Streifenmuster mit 100 $\mu$m breiten Streifen bilden. Da die Mikrospiegel in der Regel deutlich kleiner als die Rasterabmessungen sind, beispielsweise eine Kantenlänge von nur 10 $\mu$m aufweisen, enthält im Allgemeinen jeder Rasterstreifen 72 und jeder Rasterzwischenraum 74 eine Vielzahl von Mikrospiegeln.

Die Breite sowohl der Rasterstreifen 72 als auch der Rasterzwischenräume liegt unterhalb der Auflösungsgrenze des menschlichen Auges, so dass die Struktur des Rasters 70 mit bloßem Auge nicht wahrnehmbar ist. Die Farbbeschichtung 56 erscheint dem Betrachter vielmehr als teildurchlässige Schicht mit einer Durchlässigkeit, die durch das Flächenverhältnis von Rasterelemente zu Rasterzwischenräumen, also die Flächendeckung mit Rasterelementen gegeben ist. Das genannte Streifenmuster mit 100 $\mu$m breiten Rasterelementen 72 und 100 $\mu$m breiten Rasterzwischenräumen 74 weist ein Flächenverhältnis von 50:50 bzw. eine Flächendeckung mit Rasterelementen von 50% auf.

Die Mikrospiegelanordnungen 44, 54 sind jeweils in eine transparente Prägelackschicht 42, 52 eingeprägt und nach dem Aufbringen und gegebenenfalls Strukturieren der jeweiligen Farbbeschichtung 46, 56 mit einer transparenten Decklackschicht 48 bzw. 58 eingeebnet. Die Decklackschichten weisen im Wesentlichen denselben Brechungsindex wie die Prägelackschichten 42, 52 auf, so dass die Mikrospiegel in Bereichen ohne Farbbeschichtung aufgrund des fehlenden Brechungsindexunterschieds zwischen Prägelackschicht und Decklackschicht visuell nicht in Erscheinung treten.

Aus der schrägen Betrachtungsrichtung 60-C entfalten die Mikrospiegel der höher liegenden Mikrospiegelanordnung 54 in den Rasterzwischenräumen 74 aufgrund des fehlenden Brechungsindexunterschieds der Lackschichten 52, 58 keine optische Wirkung, so dass der Betrachter 60 dort auf die rot beschichteten Mikrospiegel der tiefer liegenden Mikrospiegelanordnung 44 blickt. Von diesen Mikrospiegeln stehen die Mikrospiegel 44-C im Glanzwinkel und tragen zur Bildwirkung bei, während die Mikrospiegel 44-B weit vom Glanzwinkel entfernt sind und daher unauffällig bleiben.

Im Bereich der Rasterelemente 72 sind die Mikrospiegel 54-A und 54-B der höher liegenden Mikrospiegelanordnung 54 zwar grundsätzlich auch aus Betrachtungsrichtung 60-C wahrnehmbar, die Ausrichtung dieser Mikrospiegel ist allerdings jeweils weit vom Glanzwinkel entfernt, so dass sie unauffällig erscheinen und zum Bildeindruck praktisch nicht beitragen. Insgesamt ergibt sich für den Betrachter aus Betrachtungsrichtung 60-C somit im Wesentlichen das von den Mikrospiegeln 44-C der Mikrospiegelanordnung 44 erzeugte rote Erscheinungsbild.

Aus der schrägen Betrachtungsrichtung 60-A blickt der Betrachter im Bereich der Rasterelemente 72 auf die grün beschichteten Mikrospiegel der höher liegenden Mikrospiegelanordnung 54. Von diesen Mikrospiegeln stehen die Mikrospiegel 54-A im Glanzwinkel und tragen zur Bildwirkung bei, während die Mikrospiegel 54-B weit vom Glanzwinkel entfernt sind und daher unauffällig bleiben. Im Bereich der Rasterzwischenräume 74 kann der Betrachter zwar grundsätzlich auch aus Betrachtungsrichtung 60-A die Mikrospiegel der tiefer liegenden Mikrospiegelanordnung 44 wahrnehmen, allerdings ist deren Ausrichtung aus Betrachtungsrichtung 60-A jeweils weit vom Glanzwinkel entfernt, so dass die Mikrospiegel der tiefer liegenden Mikrospiegelanordnung 44 unauffällig erscheinen und zum Bildeindruck praktisch nicht beitragen. Insgesamt zeigt sich dem Betrachter aus Betrachtungsrichtung 60-A somit im Wesentlichen das von den Mikrospiegeln 54-A der Mikrospiegelanordnung 54 erzeugte grüne Erscheinungsbild.

Aus der senkrechten Betrachtungsrichtung 60-B ergibt sich für den Betrachter eine Mischfarbe. Im Bereich der Rasterelemente 72 blickt er auf die grün beschichteten Mikrospiegel der Mikrospiegelanordnung 54, von denen die Mikrospiegel 54-B im Glanzwinkel stehen und zur Bildwirkung beitragen, während die Mikrospiegel 54-A weit vom Glanzwinkel entfernt sind und daher unauffällig bleiben. Im Bereich der Rasterzwischenräume 74 blickt der Betrachter auf die rot beschichteten Mikrospiegel der Mikrospiegelanordnung 44, von denen die Mikrospiegel 44-B im Glanzwinkel stehen und zur Bildwirkung beitragen, während die Mikrospiegel 44-C weit vom Glanzwinkel entfernt sind und daher unauffällig bleiben. Wegen der geringen Abmessungen der Rasterstreifen 72 und Rasterzwischenräume 74 sind die roten und grünen Farbeindrücke nicht getrennt wahrnehmbar, sondern der Betrachter nimmt eine Mischfarbe wahr, die durch die additive Farbmischung der Farben der roten Mikrospiegel 54-B und der grünen Mikrospiegel 44-B entsteht. Insgesamt zeigt sich dem Betrachter aus Betrachtungsrichtung 60-B somit im Wesentlichen das durch additive Farbmischung von den Mikrospiegeln 54-B der Mikrospiegelanordnung 54 und den Mikrospiegeln 44-B der Mikrospiegelanordnung 44 erzeugte gelbe Erscheinungsbild.

Im Ausführungsbeispiel der Fig. 2 wurde die Aufteilung der Mikrospiegel 44-A, 44-B bzw. 54-B, 54-C der Mikrospiegelanordnungen 44, 54 und die Rasteraufteilung der Rasters 70 in Streifen und Zwischenräume gerade so gewählt, dass aus jeder der drei Betrachtungsrichtungen 60-A, 60-B, 60-C die gleiche Anzahl an Mikrospiegeln zur Bildentstehung beiträgt, so dass die drei Erscheinungsbilder mit ähnlichen Bildhelligkeiten erzeugt werden. Es versteht sich, dass die genannten Größen grundsätzlich unabhängig voneinander und auch ortsveränderlich gewählt werden können, um auch andere, auch räumlich variierende relative Bildhelligkeiten zu erzeugen.

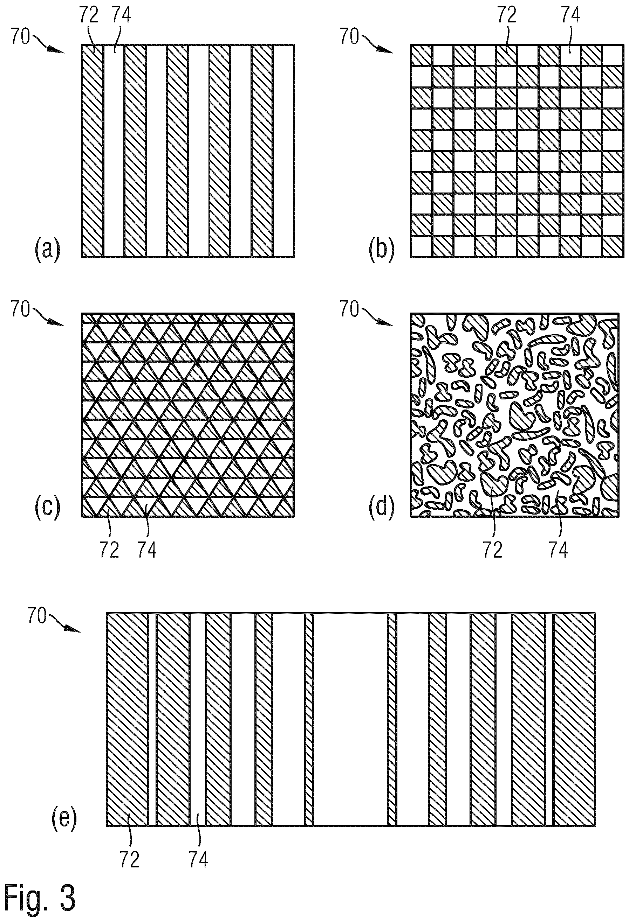

Figur 3 zeigt einige vorteilhafte Ausgestaltungen des Rasters 70 der Farbbeschichtung 56 der höher liegenden Mikrospiegelanordnung 54 in Aufsicht. Dabei zeigt Fig. 3(a) ein Raster 70 wie es in Fig. 2 verwendet ist, bei dem die Rasterelemente 72 und die Rasterzwischenräume 74 jeweils durch alternierend angeordnete Streifen gebildet sind. Die Breite der Rasterelemente und Rasterzwischenräume liegt vorteilhaft zwischen 20 $\mu$m und 140 $\mu$m, die Länge ist beliebig und kann mehrere Millimeter oder sogar einige Zentimeter betragen. Die Flächendeckung kann einfach über die relative Breite der Rasterelemente und Rasterzwischenräume eingestellt werden. In dieser, aber auch in den nachfolgend beschriebenen Gestaltungen liegt die Flächendeckung des Rasters mit Rasterelementen vorzugsweise zwischen 30% und 70%, insbesondere zwischen 40% und 60%.

Figur 3(b) zeigt ein Raster 70 bei dem die Rasterelemente 72 und die Rasterzwischenräume 74 ein Schachbrettmuster bilden. Die Abmessung der Rasterelemente und Rasterzwischenräume liegt vorteilhaft zwischen 20 x 20 $\mu$m$^2$ und 140 x 140 $\mu$m$^2$, die Flächendeckung beträgt im Ausgangsfall 50%. Soll eine davon abweichende Flächendeckung erzeugt werden, kann ein Teil der Rasterelemente 72 entfallen oder ein Teil der Rasterzwischenräume 74 mit Rasterelementen belegt werden.

Die Rasterelemente und Rasterzwischenräume können auch andere polygonale Formen oder unregelmäßige Formen aufweisen. Beispielhaft zeigt Fig. 3(c) eine Ausgestaltung, bei der die Rasterelemente 72 und Rasterzwischenräume 74 des Rasters 70 durch Dreiecke gebildet sind. Bei dem Raster 70 der Fig. 3(d) sind die Rasterelemente 72 und Rasterzwischenräume 74 durch unregelmäßige Formen gebildet. Die Rasterelemente und/oder Rasterzwischenräume können auch eine zusammenhängende Struktur bilden, wie etwa in Fig. 3(d) für die Rasterzwischenräume 74 gezeigt.

Figur 3(e) zeigt schematisch ein Beispiel eines räumlich variierenden Rasters 70 aus jeweils streifenförmigen Rasterelementen 72 und Rasterzwischenräumen 74 gleicher Gesamtbreite, beispielsweise 100 $\mu$m. Die Breite der Rasterelemente 72 nimmt dabei von einer Maximalbreite am linken Bildrand (beispielsweise 100 $\mu$m) auf eine Minimalbreite in der Bildmitte (beispielsweise 0 $\mu$m) ab und nimmt zum rechten Bildrand hin wieder auf die Maxmalbreite zu. Entsprechend nimmt die Breite der Rasterzwischenräumen 74 von der Minimalbreite am linken Bildrand (beispielsweise 0 $\mu$m) auf eine Maximalbreite in der Bildmitte (beispielsweise 100 $\mu$m) zu, und nimmt zum rechten Bildrand hin wieder auf die Minimalbreite ab.

Durch die räumliche variierende relative Breite von Rasterelementen 72 und Rasterzwischenräumen 74 entsteht ein räumliche variierender Mischungsanteil der Farbbeiträge der tiefer liegenden und der höher liegenden Reliefstrukturen. Auf diese Weise kann beispielsweise ein kontinuierlicher Farbverlauf zwischen den Farben der beiden Reliefstrukturen erzeugt werden.

Die Figuren 4 bis 8 illustrieren einige visuell attraktive Effekte, die sich mit erfindungsgemäßen Sicherheitselementen verwirklichen lassen.

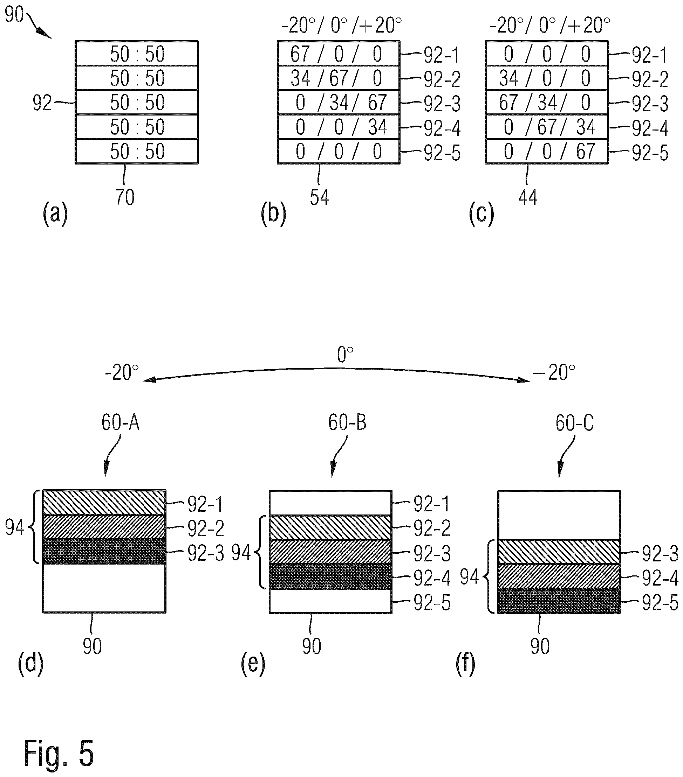

In Fig. 4 und 5 wird zur Illustration auf 5 Teilbereiche des Sicherheitselements mit unterschiedlicher Ausrichtung der Mikrospiegel bzw. unterschiedlichem Flächenverhältnis von Rasterelementen und Rasterzwischenräumen Bezug genommen. Es versteht sich, dass ein reales Sicherheitselement typischerweise auch mehr als 5 solche Teilbereiche enthalten und daher feinere und fast kontinuierliche Abstufungen aufweisen kann.

Das Sicherheitselement 80 der Fig. 4 geht von Mikrospiegelanordnungen wie bei Fig. 2 aus, die jeweils für die drei unterschiedlichen Glanzwinkel -20° (Betrachtung von schräg links), 0° (senkrechte Betrachtung) und +20° (Betrachtung von schräg rechts) unterschiedliche Erscheinungsbilder erzeugen. Wie bei Fig. 2 ist die Farbbeschichtung der tiefer liegenden Mikrospiegelanordnung rot reflektierend, die Farbbeschichtung der höher liegenden Mikrospiegelanordnung grün reflektierend ausgebildet.

Figur 4(b) gibt für jeden der in Aufsicht dargestellten Teilbereiche 82 den Prozentanteil von Mikrospiegeln der höher liegenden Mikrospiegelanordnung 54 an, die in den jeweiligen Glanzwinkel reflektieren. Wie bei Figur 2 geschildert, sind 67% (oder 2/3) der Mikrospiegel auf einen Glanzwinkel von -20° ausgelegt und 33% (oder 1/3) der Mikrospiegel auf einen Glanzwinkel von 0°. Dieser Anteil ist in allen Teilbereichen 82 gleich, so dass Figur 4(b) fünf identische Einträge zeigt. Entsprechend gibt Fig. 4(c) für jeden Teilbereich 82 den Prozentanteil von Mikrospiegeln der tiefer liegenden Mikrospiegelanordnung 44 an, die in den jeweiligen Glanzwinkel reflektieren. Dabei sind 67% der Mikrospiegel auf einen Glanzwinkel von +20° ausgelegt und 33% der Mikrospiegel auf einen Glanzwinkel von 0°.

Während die Figuren 4(b) und (c) die Ausrichtung der Mikrospiegel betreffen, gibt Fig. 4(a) das Flächenverhältnis der Rasterelemente 72 und Rasterzwischenräume 74 des Rasters 70 in den Teilbereichen 82 an. Bei dem Ausführungsbeispiel der Fig. 2 weist das Raster 70 ein konstantes Flächenverhältnis von 50:50 auf, so dass sich dort über die Fläche des Sicherheitselements 30 ein gleichmäßiges Erscheinungsbild ergab.

Wie in Fig. 4(a) ersichtlich, variiert beim Ausführungsbeispiel der Fig. 4 das Raster 70 des Sicherheitselements 80 räumlich und weist in jedem der Teilbereich eine andere Flächendeckung auf. Konkret verringert sich das Flächenverhältnis von Rasterelementen zu Rasterzwischenräumen von 80:20 in dem in der Figur obersten Teilbereich 82-O bis zu einem Flächenverhältnis von 20:80 in dem in Fig. 4(a) untersten Teilbereich 82-U. Im obersten Teilbereich 82-O dominieren somit die Rasterelemente und damit die Farbwirkung der höher liegenden Farbbeschichtung, während in dem untersten Teilbereich 82-U die Rasterzwischenräume und damit die Farbwirkung der tiefer liegenden Farbbeschichtung dominiert. Im mittleren Teilbereich 82-M beträgt das Flächenverhältnis 50:50, dort mischen sich die Farbwirkungen der Farbbeschichtungen zu gleichen Teilen.

Die Figuren 4(d) bis (f) illustrieren das Erscheinungsbild des Sicherheitselements 80 bei Betrachtung aus den Betrachtungswinkeln -20° (Betrachtungsposition 60-A, Fig. 4(d)), 0° (Betrachtungsposition 60-B, Fig. 4(e)) und +20° (Betrachtungsposition 60-C, Fig. 4(f)).

Bei Betrachtung unter einem Betrachtungswinkel von -20° aus Betrachtungsposition 60-A stehen nur die Mikrospiegel 54-A der höher liegenden Mikrospiegelanordnung 54 im Glanzwinkel, die anderen Mikrospiegel sind unauffällig und tragen nichts zum Bildeindruck bei. Auch von den Mikrospiegeln 54-A tragen nur diejenigen Mikrospiegel bei, die mit Rasterelementen 72 der Farbbeschichtung 56 versehen sind, und deren Anteil variiert räumlich je nach Teilbereich von 80% im Teilbereich 82-O über 50% im Teilbereich 82-M bis hin zu 20% im Teilbereich 82-U. Aus der Betrachtungsposition 60-A ergibt sich somit ein durchgehend grünes Erscheinungsbild des Sicherheitselements 80, allerding mit einer von oben nach unten abnehmenden Helligkeit, wie in Fig. 4(d) schematisch dargestellt.

Bei Betrachtung unter einem Betrachtungswinkel von +20° aus Betrachtungsposition 60-C stehen nur die Mikrospiegel 44-C der tiefer liegenden Mikrospiegelanordnung 44 im Glanzwinkel, die anderen Mikrospiegel sind unauffällig und tragen nichts zum Bildeindruck bei. Auch von den Mikrospiegeln 44-C tragen nur diejenigen Mikrospiegel bei, die in Zwischenräumen 74 des Rasters liegen, und deren Anteil variiert räumlich je nach Teilbereich 82 von 20% im Teilbereich 82-O über 50% im Teilbereich 82-M bis hin zu 80% im Teilbereich 82-U. Aus Betrachtungsposition 60-C ergibt sich somit ein durchgehend rotes Erscheinungsbild des Sicherheitselements 80, allerdings mit einer von oben nach unten zunehmenden Helligkeit, wie in Fig. 4(f) schematisch dargestellt.

Bei senkrechter Betrachtung schließlich aus Betrachtungsposition 60-B stehen sowohl die Mikrospiegel 54-B der höher liegenden Mikrospiegelanordnung 54 als auch die Mikrospiegel 44-B der tiefer liegenden Mikrospiegelanordnung 44 im Glanzwinkel, die anderen Mikrospiegel sind unauffällig und tragen nichts zum Bildeindruck bei. Von den Mikrospiegeln 54-B tragen diejenigen Mikrospiegel, die mit einem Rasterelement 72 versehen sind, mit grüner Farbe zum Bildeindruck bei, von den Mikrospiegeln 44-B tragen diejenigen, die in Zwischenräumen 74 des Rasters liegen, mit roter Farbe bei. Das Mischungsverhältnis der Farbbeiträge ändert sich wegen der räumlich variierenden Flächendeckung des Rasters somit von 80% Grün/20% Rot im Teilbereich 82-O über 50% Grün/ 50% Rot im Teilbereich 82-M bis hin zu 20% Grün/80% Rot im Teilbereich 82-U. Aus der Betrachtungsposition 60-B zeigt sich somit ein Farbverlauf, der von Grün über Gelbgrün, Gelb und Orange bis hin zu Rot reicht, wie in Fig. 4(e) schematisch dargestellt.

Der Teilbereich 82-M bildet dabei insbesondere einen Trikolorbereich, dessen Farbeindruck beim Kippen des Sicherheitselements 80 von Grün über Gelb zu Rot wechselt.

Das Ausführungsbeispiel der Fig. 5 zeigt ein Sicherheitselement 90, das ein dreifarbiges Erscheinungsbild mit dem Bewegungseffekt eines hellen Balkens (Rolling-Bar-Effekt) verbindet. Auch das Sicherheitselement 90 der Fig. 5 geht von Mikrospiegelanordnungen aus, die jeweils für die drei unterschiedlichen Glanzwinkel -20° (Betrachtung von schräg links), 0° (senkrechte Betrachtung) und +20° (Betrachtung von schräg rechts) unterschiedliche Erscheinungsbilder erzeugen. Zur Illustration sind fünf Teilbereiche des Sicherheitselements gezeigt, es versteht sich aber, dass durch Verwendung einer größeren Anzahl an Teilbereichen und Verwendung von kleineren Schritten in den Glanzwinkeln glattere Bewegungsverläufe erzeugt werden können. Wie bei Fig. 4 ist die Farbbeschichtung der tiefer liegenden Mikrospiegelanordnung rot reflektierend, die Farbbeschichtung der höher liegenden Mikrospiegelanordnung grün reflektierend gewählt.

Zunächst gibt Figur 5(b) gibt für jeden der in Aufsicht dargestellten Teilbereiche 92 den Prozentanteil von Mikrospiegeln der höher liegenden Mikrospiegelanordnung 54 an, die in den jeweiligen Glanzwinkel reflektieren. Anders als in den bisher besprochenen Ausführungsbeispielen ist dieser Anteil nicht konstant, sondern verändert sich räumlich um den Bewegungseffekt des Balkens zu erzeugen. Figur 5(c) gibt entsprechend für jeden Teilbereich 92 den Prozentanteil von Mikrospiegeln der tiefer liegenden Mikrospiegelanordnung 44 an, die in den jeweiligen Glanzwinkel reflektieren, wobei auch hier die Anteile der verschieden orientierten Mikrospiegel räumlich variieren.

Figur 5(a) gibt das Flächenverhältnis der Rasterelemente 72 und Rasterzwischenräume 74 des Rasters 70 an, welches bei im Ausführungsbeispiel in allen Teilbereichen 92 gleich ist und 50: 50 beträgt.

Die Figuren 5(d) bis (f) illustrieren das Erscheinungsbild des Sicherheitselements 90 bei Betrachtung aus den Betrachtungswinkeln -20° (Betrachtungsposition 60-A, Fig. 5(d)), 0° (Betrachtungsposition 60-B, Fig. 5(e)) und +20° (Betrachtungsposition 60-C, Fig. 5(f)).

Bei Betrachtung unter einem Betrachtungswinkel von -20° aus Betrachtungsposition 60-A tragen jeweils die auf einen Glanzwinkel von -20° ausgelegten Mikrospiegel zu Bildeindruck bei. Wie aus Figuren 5(b) und (c) ersichtlich, sind im obersten Teilbereich 92-1 beispielsweise 67% der Mikrospiegel der höher liegenden Mikrospiegelanordnung 54, aber keine Mikrospiegel der tiefer liegenden Mikrospiegelanordnung 44 auf einen Glanzwinkel von -20° ausgelegt. Wegen der 50%igen Flächendeckung des Teilbereichs 92-1 mit Rasterelementen 72 der grünen Farbbeschichtung 56 erscheint der Teilbereich 92-1 daher mit grünem Erscheinungsbild.

Im anschließenden Teilbereich 92-2 tragen 33% der Mikrospiegel der höher liegenden Mikrospiegelanordnung 54 und auch 33% der Mikrospiegel der tiefer liegenden Mikrospiegelanordnung 44 zum Bildeindruck im Glanzwinkel von -20° bei, so dass der Teilbereich 92-2 wegen der 50%igen Rasterung mit dem Erscheinungsbild der Mischfarbe Gelb erscheint.

Im dritten Teilbereich 92-3 tragen die Mikrospiegel der höher liegenden Mikrospiegelanordnung 54 nicht mehr zum Bildeindruck bei, dafür jedoch 67% der Mikrospiegel der tiefer liegenden Mikrospiegelanordnung 44, so dass sich zusammen mit der 50%igen Rasterung ein rotes Erscheinungsbild für den Teilbereich 92-3 ergibt. Die Teilbereiche 92-4 und 92-5 enthalten keine im Glanzwinkel stehenden Mikrospiegel, so dass diese Teilbereiche unauffällig erscheinen. Insgesamt ist aus Betrachtungsrichtung 60-A somit ein heller, dreifarbiger Balken 94 mit der Farbfolge Grün-Gelb-Rot sichtbar, wie in Fig. 5(d) illustriert.

Bei Betrachtung unter einem Betrachtungswinkel von 0° aus Betrachtungsposition 60-B ist ebenfalls der dreifarbige Balken 94 sichtbar, er erscheint allerdings um einen Teilbereich nach unten verschoben. Der Teilbereich 92-1 enthält keine bei 0° im Glanzwinkel stehenden Mikrospiegel und erscheint daher unauffällig. Beim Teilbereich 92-2 tragen 67% der Mikrospiegel der höher liegenden Mikrospiegelanordnung 54 aber keine Mikrospiegel der tiefer liegenden Mikrospiegelanordnung 44 zum Bildeindruck bei 0° bei, so dass sich dort ein grünes Erscheinungsbild ergibt. Beim Teilbereich 92-3 tragen jeweils 33% der Mikrospiegel der höher liegenden und der tiefer liegenden Mikrospiegelanordnung zum Bildeindruck bei, so dass sich durch die 50%igen Rasterung die Mischfarbe Gelb ergibt. Im Teilbereich 92-4 tragen die Mikrospiegel der höher liegenden Mikrospiegelanordnung 54 nicht mehr zum Bildeindruck bei, dafür jedoch 67% der Mikrospiegel der tiefer liegenden Mikrospiegelanordnung 44, so dass sich den Teilbereich 92-4 ergibt ein rotes Erscheinungsbild für. Der Teilbereich 92-5 enthält keine bei 0° im Glanzwinkel stehenden Mikrospiegel und erscheint daher unauffällig. Aus Betrachtungsrichtung 60-B ist der heller, dreifarbiger Balken 94 daher um eine Position verschoben sichtbar, wie in Fig. 5(e) gezeigt.

Schließlich ist bei Betrachtung unter einem Betrachtungswinkel von +20° aus Betrachtungsposition 60-C der dreifarbige Balken 94 um eine weitere Position verschoben sichtbar, wie in Fig. 5(f) gezeigt. Der Farbeindruck der Teilbereiche 92-1 und 92-5 ergibt sich in analoger Weise aus den Anteilen der im Glanzwinkel stehenden Mikrospiegel der Figuren 5(b) und (c).

Beim Kippen des Sicherheitselements 90 scheint der dreifarbige Balken 94 von oben nach unten zu laufen und bei Zurückkippen zurückzulaufen. Der Teilbereich 92-3 bildet dabei insbesondere einen Trikolorbereich, dessen Farbeindruck beim Kippen des Sicherheitselements 90 von Rot über Gelb zu Grün wechselt.

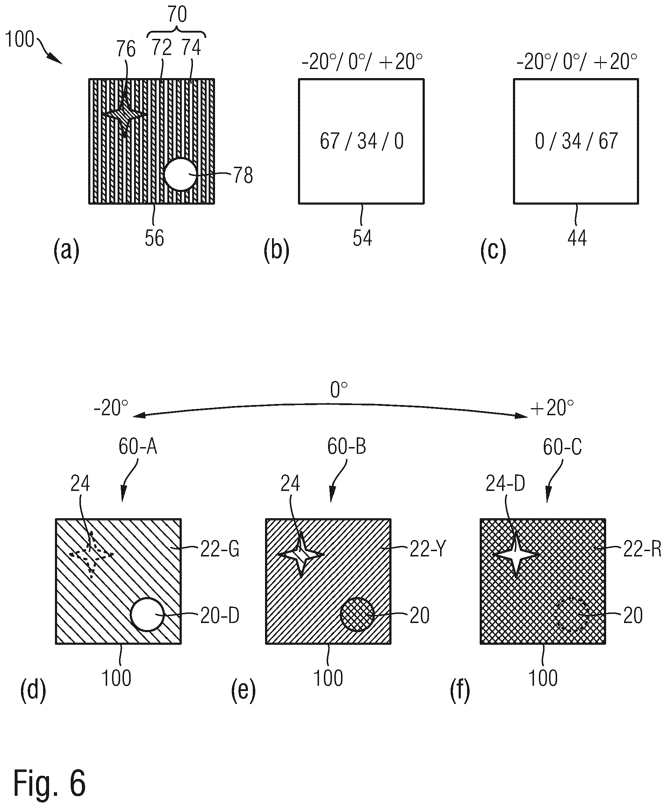

Das Ausführungsbeispiel der Fig. 6 zeigt ein Sicherheitselement 100 mit einem dreifarbigen Erscheinungsbild, der in Fig. 1 gezeigten Art. Das Sicherheitselement 100 der Fig. 6 geht dabei von denselben Mikrospiegelanordnungen wie die Sicherheitselemente der Figuren 2 und 4 aus, so dass die Figuren 6(b) und 6(c), die die Ausrichtung der Mikrospiegel in den Mikrospiegelanordnungen 44, 54 angeben, den Figuren. 4(b) bzw. 4(c) entsprechen. Die Farbbeschichtung der tiefer liegenden Mikrospiegelanordnung ist wieder als rot reflektierend, die Farbbeschichtung der höher liegenden Mikrospiegelanordnung als grün reflektierend angenommen

Das gegenüber Fig. 2 unterschiedliche Erscheinungsbild wird bei dem Ausführungsbeispiel der Fig. 6 durch die in Fig. 6(a) schematisch dargestellte Farbbeschichtung 56 der höher liegenden Mikrospiegelanordnungen 54 erzeugt. In ihrem Hintergrundbereich weist die Farbbeschichtung 56 ein Raster 70 aus streifenförmigen Rasterelementen 72 und Rasterzwischenräumen 74, beispielsweise mit einer Breite von jeweils 80 μm auf. Darüber hinaus enthält die Farbbeschichtung 56 auch zwei großflächige und mit bloßem Auge sichtbare Bereiche, nämlich einerseits den sternförmigen, vollflächigen Bereich 76 und andererseits die kreisförmige Aussparung 78. Die Elemente 76, 78 haben beide Abmessungen von einigen Millimetern oder sogar Zentimetern. Zum Ausgleich der fehlenden Rasterung ist vorzugsweise im vollflächigen Bereich 76 der Beschichtung bzw. im Bereich der Aussparung 78 der Beschichtung die Anzahl der entsprechend ausgerichteten Mikrospiegel halbiert.

Die Figuren 6(d) bis (f) illustrieren das Erscheinungsbild des Sicherheitselements 100 bei Betrachtung aus den Betrachtungswinkeln -20° (Betrachtungsposition 60-A, Fig. 6(d)), 0° (Betrachtungsposition 60-B, Fig. 6(e)) und +20° (Betrachtungsposition 60-C, Fig. 6(f)).

Bei Betrachtung unter einem Betrachtungswinkel von -20° aus Betrachtungsposition 60-A stehen, wie bei Fig. 4 beschrieben, nur die Mikrospiegel 54-A der höher liegenden Mikrospiegelanordnung 54 im Glanzwinkel. Diese Mikrospiegel treten nicht nur im Bereich der Rasterelemente 72 in Erscheinung, sondern auch in dem sternförmigen, vollflächigen Bereich 76 der Farbbeschichtung 56. Im Bereich der Aussparung 78 kann der Betrachter zwar wie in den Rasterzwischenräumen 74 grundsätzlich die Mikrospiegel der tiefer liegenden Mikrospiegelanordnung 44 wahrnehmen, allerdings ist deren Ausrichtung aus der Betrachtungsrichtung 60-A weit vom Glanzwinkel entfernt, so dass die Mikrospiegel der Mikrospiegelanordnung 44 im Bereich der Aussparung 78 dunkel erscheinen. Insgesamt ergibt sich somit aus Betrachtungsposition 60-A das bei Fig .1 bereits beschriebene Erscheinungsbild, bei dem der Hintergrundbereich 22-G und der Stern 24 leuchtend grün erscheinen, während der Punkt 20-D dunkel erscheint, wie in Fig. 6(d) dargestellt. Der Punkt 20-D ist so dunkel, dass er für den Betrachter gerade im Vergleich zu dem hell leuchtenden grün, eher farblos (oder allenfalls schwach rötlich) erscheint. die Im Bereich des Sternes 24 könnte das leuchtende Grün, bei gleichem Farbtonwert und gleicher Helligkeit, aufgrund der fehlenden Rasterung für den Betrachter eine höhere Sättigung zeigen als der Hintergrundbereich 22-G, wenn die Anzahl der wirksamen Mikrospiegel 54-A der höher liegenden Mikrospiegelanordnung in dem Bereich nicht reduziert wird. Falls der Stern 24 im Hintergrundbereich 22-G vollständig verschwinden soll, wird man die Anzahl der wirksamen Mikrospiegel 54-A der höher liegenden Mikrospiegelanordnung daher reduzieren, insbesondere zum Ausgleich der fehlenden Rasterung halbieren.

Bei Betrachtung unter einem Betrachtungswinkel von +20° aus Betrachtungsposition 60-C stehen, wie bei Fig. 4 beschrieben, nur die Mikrospiegel 44-C der tiefer liegenden Mikrospiegelanordnung 44 im Glanzwinkel. Diese Mikrospiegel treten nicht nur im Bereich der Rasterzwischenräume 74 in Erscheinung, sondern auch in der kreisförmigen Aussparung 78 der Farbbeschichtung 56. Im vollflächigen Bereich 76 kann der Betrachter zwar wie im Bereich der Rasterelemente 72 grundsätzlich auch die Mikrospiegel der höher liegenden Mikrospiegelanordnung 44 wahrnehmen, allerdings ist deren Ausrichtung weit vom Glanzwinkel entfernt, so dass diese Mikrospiegel dunkel erscheinen. Insgesamt ergibt sich somit aus Betrachtungsposition 60-C das bei Fig .1 bereits beschriebene Erscheinungsbild, bei dem der Hintergrundbereich 22-R und der Punkt 20 leuchtend rot erscheinen, während der Stern 24-D dunkel (und wieder eher farblos) erscheint, wie in Fig. 6(f) dargestellt.

Aus der senkrechten Betrachtungsrichtung 60-B ergeben sich für den Betrachter drei Farbeindrücke. Im Hintergrundbereich mit dem Raster 70 zeigt sich, wie bei Fig. 4 bereits beschrieben, die Mischfarbe Gelb. Im sternförmigen, vollflächigen Bereich 76 sieht der Betrachter nur die Mikrospiegel der höher liegenden Mikrospiegelanordnung von denen zudem ein Teil (33%) im Glanzwinkel steht, so dass sich dort ein leuchtend grünes Erscheinungsbild ergibt. Im Bereich der kreisförmigen Aussparung 78 sieht der Betrachter dagegen nur die Mikrospiegel der tiefer liegenden Mikrospiegelanordnung, von denen ebenfalls ein Teil (33%) im Glanzwinkel steht, so dass sich dort ein leuchtend rotes Erscheinungsbild ergibt. Insbesondere sieht der Betrachter daher aus Betrachtungsposition 60-B einen grün leuchtenden Stern 24 und einen rot leuchtenden Punkt 20 vor gelb leuchtenden Hintergrund 22-Y.

Der Hintergrundbereich des Sicherheitselements 100 bildet dabei einen Trikolorbereich, dessen Farbeindruck beim Kippen des Sicherheitselements von Grün über Gelb zu Rot wechselt.

Mit dem vorgestellten Prinzip können zahlreiche Bewegungsbilder erzeugt werden, bei denen sich ein Objekt beim Kippen über die Fläche des Sicherheitselements zu bewegen scheint und dabei zusätzlich seine Farbe ändert. Die Mikrospiegel können dabei nicht nur auf bestimmte Glanzwinkel mit großem Winkelabstand (beispielsweise 20°, wie in den oben beschriebenen Ausführungsbeispielen) auslegt sein, sondern können auch eine quasikontinuierliche Variation ihrer Ausrichtung in einem bestimmten Winkelbereich, beispielsweise von -20° bis +10° oder von -10° bis +20° aufweisen, so dass sich der Bildeindruck für den Betrachter beim Kippen des Sicherheitselements fast kontinuierlich verändert, beispielsweise in Schrittweiten von 5°, 2° oder auch nur 1°.

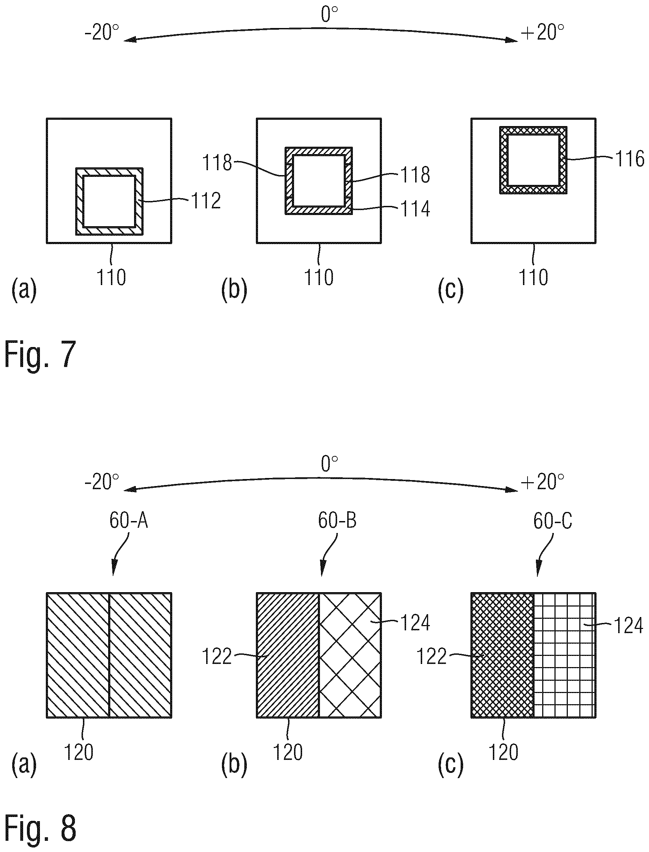

Beispielsweise können mit Bezug auf Fig. 7 in der tiefer liegenden Mikrospiegelanordnung 44 eines Sicherheitselements 110 jeweils Bereiche in Form mehrerer Rechteckrahmen vorgesehen sein, die schrittweise vom unteren zum oberen Rand des Sicherheitselements verschoben sind und in denen die Mikrospiegel auf Glanzwinkel zwischen -20° und +10° ausgelegt sind. Entsprechend sind in der höher liegenden Mikrospiegelanordnung 54 schrittweise verschobene Rechteckrahmenbereiche vorgesehen, in denen die Mikrospiegel auf Glanzwinkel zwischen -10° und +20° ausgelegt sind. Die tiefer liegende Mikrospiegelanordnung 44 ist dabei mit einer vollflächigen roten Farbbeschichtung 46 versehen, die höher liegende Mikrospiegelanordnung 54 mit einer grünen Farbbeschichtung 56 in Form eines 50:50 Rasters.

Bei der Betrachtung des Sicherheitselements 110 ergeben sich dann die in Fig. 7 illustrierten Erscheinungsbilder, wobei der Übersichtlichkeit halber nur das Erscheinungsbild bei drei diskreten Kippstellungen gezeigt ist. Mit Bezug auf Fig. 7(a) ist aus einer schrägen Betrachtungsrichtung von links (Betrachtungswinkel -20°) der am unteren Rand des Sicherheitselements 110 liegende Rechteckrahmen 112 grün leuchtend sichtbar, da gerade die diesem Rahmen zugeordneten Mikrospiegel der höher liegenden Mikrospiegelanordnung 54 aus diesem Betrachtungswinkel im Glanzwinkel stehen und die höher liegenden Mikrospiegelanordnung zu 50% mit Rasterelementen beschichtet ist.

Entsprechend ist aus einer schrägen Betrachtungsrichtung von rechts (Betrachtungswinkel +20°) der am oberen Rand des Sicherheitselements 110 liegende Rechteckrahmen 116 rot leuchtend sichtbar, wie in Fig. 7(c) illustriert, da gerade die diesem Rahmen zugeordneten Mikrospiegel der tiefer liegenden Mikrospiegelanordnung 44 aus diesem Betrachtungswinkel im Glanzwinkel stehen und sie durch den 50%igen Flächenanteil der Rasterzwischenräume sichtbar sind.

Zwischen den beiden Extremstellungen sind mehrere Rechteckrahmen 114 sichtbar, die auf dem Sicherheitselement 110 zwischen dem oberen und dem unteren Rechteckrahmen liegen. In der Mittelstellung der Fig. 7(b) ist der in der Mitte des Sicherheitselements 110 liegende Rechteckrahmen 114 gelb leuchtend sichtbar, da bei diesem Rahmen gleich viele Mikrospiegel der höher liegenden Mikrospiegelanordnung 54 und der tiefer liegenden Mikrospiegelanordnung 44 zum Bildeindruck beitragen und sich daher die Mischfarbe Gelb ergibt.

Bevorzugt sind Mikrospiegel der höher liegenden Mikrospiegelanordnung 54 an den entsprechenden Positionen, so ausgerichtet, dass sich der grüne leuchtende Rechteckrahmen 112 in einem ersten Kippwinkelbereich nach oben bewegt. In einem zweiten Kippwinkelbereich, hier beispielsweise zwischen -10° und +10°, sind auch Mikrospiegel der tiefer liegenden Mikrospiegelanordnung 44 so ausgerichtet, dass sie den Rechteckrahmen - an seiner jeweiligen nach oben wandernden Position - darstellen. Der Rechteckrahmen leuchtet somit in dem zweiten Kippwinkelbereich für den Betrachter vollständig in dem Mischfarbton, gelb, auf. In einem dritten Kippwinkelbereich, wechselt die Farbe des sich bewegenden Rechteckrahmens schließlich zu rot.

Auch das Sicherheitselement 110 enthält Trikolorbereiche. Beispielsweise bilden die in Fig. 7(b) einzeichnete Teilbereiche 118 Trikolorbereiche, deren Farbeindruck beim Kippen des Sicherheitselements von Grün über Gelb zu Rot wechselt.

In einer alternativen Ausgestaltung wechselt der Farbeindruck nicht des gesamten Rechteckrahmens gleichzeitig. Der Rechteckrahmen erscheint ab einem bestimmten Kippwinkel in unterschiedlichen Farbtönen, vorzugsweise mit einem Farbverlauf. Der grüne Rechteckrahmen 112 bewegt sich bis zu einem bestimmten Kippwinkel nach oben, dann entstehen zunächst am oberen Rand des Rechteckrahmens Mischfarbtöne, die näher bei Grün liegen. In der mittleren Position gemäß Figur 7(b) erscheint der mittlere Teilbereich 118 in Mischfarbtönen, die näher bei Gelb liegen. Die Mischfarbe liegt dabei im unteren Teil des Rechteckrahmens näher bei Grün und im oberen Teilbereich näher bei Rot. Wiederum bildet der mittlere Teilbereich 118 einen Trikolorbereich, dessen Farbton - nun kontinuierlich - von Grün zu Gelb zu Rot übergeht. Es könnte also zwischen einem kontinuierlichen und einem nichtkontinuierlichen Farbwechsel unterschieden werden.

Es versteht sich, dass der Farbwechsel Grün-Gelb-Rot der bisher beschriebenen Ausführungsbeispiele lediglich beispielhaft gewählt wurde und dass je nach Farbgebung der oberen und unteren Farbbeschichtung auch anders Farbwechsel möglich sind. Es können auch mehrere Farbwechsel in einer Gestaltung vorgesehen sein, wie nachfolgend mit Bezug auf Fig. 8 erläutert.

Bei dem Sicherheitselement 120 der Fig. 8 sind die Mikrospiegel der höher liegenden Mikrospiegelanordnung 54 und der tiefer liegenden Mikrospiegelanordnung 44 zur Illustration wie bei Fig. 2 ausgerichtet. Die Farbbeschichtung 56 der höher liegenden Mikrospiegelanordnung ist durch eine grün reflektierende Farbbeschichtung mit einem 50:50 Raster, beispielsweise in Form eines Schachbrettmusters nach Fig. 3(b) mit 100 $\mu$m x 100 $\mu$m großen Feldern gebildet. Die Farbbeschichtung 46 der tiefer liegenden Mikrospiegelanordnung 44 ist vollflächig, allerding farblich zweigeteilt und ist in der linken Hälfte des Sicherheitselements 120 rot reflektierend und in der rechten Hälfe blau reflektierend ausgebildet.

Bei der Betrachtung des Sicherheitselements 120 aus den drei Betrachtungswinkeln -20°, 0° und +20° ergeben sich dann die in Fig. 8 gezeigten Erscheinungsbilder. Aus der schrägen Betrachtungsrichtung 60-A stehen wiederrum nur die Mikrospiegel 54-A der höher liegenden Mikrospiegelanordnung 54 im Glanzwinkel, welche im Bereich der Rasterelemente des Rasters 70 grün leuchtend in Erscheinung treten. Die Mikrospiegel der tiefer liegenden Mikrospiegelanordnung 44 sind zwar grundsätzlich in den Rasterzwischenräumen wahrnehmbar, ihre Ausrichtung ist allerdings weit vom Glanzwinkel entfernt, so dass sie unabhängig von der Beschichtungsfarbe nicht zum Bildeindruck beitragen. Aus der Betrachtungsrichtung 60-A ergibt sich somit ein gleichmäßig grün leuchtendes Erscheinungsbild wie in Fig. 8(a) illustriert.

Bei Betrachtung unter einem Betrachtungswinkel von +20° aus Betrachtungsposition 60-C stehen nur die Mikrospiegel 44-C der tiefer liegenden Mikrospiegelanordnung 44 im Glanzwinkel, welche im Bereich der Rasterzwischenräume des Rasters leuchtend in Erscheinung treten. Wegen der zweifarbigen Beschichtung treten die Mikrospiegel 44-C in der linken Hälfte 122 des Sicherheitselements rot leuchtend und in der rechten Hälfte 124 blau leuchtend in Erscheinung. Die Mikrospiegel der höher liegenden Mikrospiegelanordnung 54 sind zwar im Bereich der Rasterelemente 72 grundsätzlich auch aus Betrachtungsrichtung 60-C wahrnehmbar, da ihre Ausrichtung aber weit vom Glanzwinkel entfernt ist, tragen sie zum Bildeindruck praktisch nicht bei. Aus der Betrachtungsrichtung 60-C ergibt sich somit ein zweigeteiltes rot/blaues Erscheinungsbild des Sicherheitselements 120 wie in Fig. 8(c) illustriert.

Aus der senkrechten Betrachtungsrichtung 60-B ergibt sich für den Betrachter in beiden Hälften des Sicherheitselements 120 jeweils eine Mischfarbe. In der linken Hälfte 122 ergibt sich, wie bei Fig. 2 bereits beschrieben, durch das Zusammenwirken der grün beschichteten Mikrospiegel der höher liegenden Mikrospiegelanordnung 54 und der rot beschichteten Mikrospiegel 44-B der tiefer liegenden Mikrospiegelanordnung 44 die Mischfarbe Gelb. Analog ergibt sich in der rechten Hälfte 124 des Sicherheitselements 120 durch das Zusammenwirken der grün beschichteten Mikrospiegel der höher liegenden Mikrospiegelanordnung 54 und der blau beschichteten Mikrospiegel 44-B der tiefer liegenden Mikrospiegelanordnung 44 die Mischfarbe Türkis. Aus der Betrachtungsrichtung 60-B ergibt sich für den Betrachter somit ein zweigeteiltes gelb/türkises Erscheinungsbild des Sicherheitselements 120 wie in Fig. 8(b) illustriert.

Jede der Hälften des Sicherheitselements 120 bildet dabei einen Trikolorbereich, wobei der Farbeindruck in der linken Hälfte 122 von beim Kippen des Sicherheitselements von Grün über Gelb zu Rot wechselt und in der rechten Hälfte 124 von Grün über Türkis zu Blau.

Es versteht sich, dass mehrere Farbwechsel auch mit räumlich variierenden Rastern und mit verschiedenen Bewegungseffekten kombiniert werden können, wie oben grundsätzlich bereits beschrieben.

Bezugszeichenliste

| | |
|---|---|
| 10 | Banknote |
| 12 | Sicherheitselement |
| 14-A, 14-B, 14-C | Erscheinungsbilder |
| 20, 20-D | Punkt |
| 22, 22-Y, 22-G, 22-R | Hintergrund |
| 24, 24-D | Stern |
| 30 | Sicherheitselement |
| 32 | Träger |
| 40 | reflektiver Flächenbereich |
| 42 | Prägelackschicht |
| 44 | tiefer liegende Reliefstruktur |
| 44-B, 44-C | Mikrospiegel |
| 46 | rot reflektierende Farbbeschichtung |
| 48 | Decklackschicht |
| 52 | Prägelackschicht |
| 54 | höher liegende Reliefstruktur |
| 54-A, 54-B | Mikrospiegel |
| 56 | grün reflektierende Farbbeschichtung |
| 58 | Decklackschicht |
| 60 | Betrachter |
| 60-A, 60-B, 60-C | Betrachtungsrichtungen |
| 70 | Raster |
| 72 | Rasterelemente |
| 74 | Rasterzwischenräume |
| 80 | Sicherheitselement |
| 82, 82-O, 82-M, 80-U | Teilbereiche |
| 90 | Sicherheitselement |
| 92, 91-1 bis 92-5 | Teilbereiche |
| 94 | dreifarbiger Balken |
| 100 | Sicherheitselement |
| 110 | Sicherheitselement |
| 112, 114, 116 | Rechteckrahmen |
| 118 | Trikolorbereiche |
| 120 | Sicherheitselement |
| 122 | linke Hälfte des Sicherheitselements |
| 125 | rechte Hälfte des Sicherheitselements |

**Patentansprüche**

1. Optisch variables Sicherheitselement (30) zur Absicherung von Wertgegenständen, dessen Flächenausdehnung eine darauf senkrecht stehende z-Achse definiert, mit einem mehrfarbigen reflektiven Flächenbereich, wobei

   - der mehrfarbige reflektive Flächenbereich zwei Reliefstrukturen (44, 54) enthält, die in z-Richtung in unterschiedlichen Höhenstufen angeordnet sind und eine tiefer liegende Reliefstruktur (44) und eine höher liegende Reliefstruktur (54) bilden,
   - die tiefer liegende Reliefstruktur (44) mit einer dem Reliefverlauf folgenden ersten Farbbeschichtung (46) und die höher liegende Reliefstruktur (54) mit einer dem Reliefverlauf folgenden zweiten Farbbeschichtung (56) versehen ist, wobei die Farbbeschichtungen (46, 56) einen unterschiedlichen Farbeindruck erzeugen,

- die beiden Reliefstrukturen (44, 54) in einem Merkmalsbereich überlappen,
- die zweite Farbbeschichtung (56) in dem Merkmalsbereich zumindest bereichsweise als regelmäßiges oder unregelmäßiges Raster (70) mit Rasterelementen (72) und Rasterzwischenräumen (74) ausgebildet ist,
- die Abmessungen der Rasterelemente (72) und/oder Rasterzwischenräume (74) zumindest in einer Richtung unterhalb von 140 $\mu$m liegen, so dass im Merkmalsbereich unter zumindest einigen Betrachtungswinkeln die erste Farbbeschichtung (46) durch die Rasterzwischenräume (74) der zweiten Farbbeschichtung (56) in Erscheinung tritt, und
- der Merkmalsbereich zumindest einen Trikolorbereich (22) enthält, der aus einem ersten Betrachtungswinkel (60-C) mit dem Farbeindruck der ersten Farbbeschichtung (46), aus einem zweiten Betrachtungswinkel (60-A) mit dem Farbeindruck der zweiten Farbbeschichtung (56), und aus einem dritten Betrachtungswinkel (60-B) mit einem Mischfarbeindruck erscheint, der sich durch additive Farbmischung der Farbeindrücke der ersten und zweiten Farbbeschichtung (46, 56) ergibt.

2. Sicherheitselement nach Anspruch 1, **dadurch gekennzeichnet, dass** die höher liegende Reliefstruktur (54) und/oder die tiefer liegende Reliefstruktur (44) durch Mikrospiegelanordnungen mit gerichtet reflektierenden Mikrospiegeln gebildet sind, insbesondere mit nicht-diffraktiv wirkenden Spiegeln, und vorzugsweise mit planen Spiegeln, Hohlspiegeln und/oder fresnelartigen Spiegeln.

3. Sicherheitselement nach Anspruch 2, **dadurch gekennzeichnet, dass** die höher liegende Mikrospiegelanordnung (54) und die tiefer liegende Mikrospiegelanordnung (44) Mischbereiche mit zumindest zwei Mikrospiegelorientierungen enthalten, in denen jeweils ein festgelegter Anteil der Mikrospiegel in jede der Mikrospiegelorientierungen ausgerichtet ist.

4. Sicherheitselement nach Anspruch 3, **dadurch gekennzeichnet, dass**

die Mischbereiche zumindest in Teilbereichen genau zwei Mikrospiegelorientierungen enthalten, in denen jeweils ein festgelegter Anteil der Mikrospiegel in jede der beiden Mikrospiegelorientierungen ausgerichtet ist; und/oder
die Mischbereiche der höher liegenden Mikrospiegelanordnung (54) und der tiefer liegenden Mikrospiegelanordnung (44) zumindest teilweise übereinander angeordnet sind.

5. Sicherheitselement nach Anspruch 4, **dadurch gekennzeichnet, dass** zumindest ein Trikolorbereich (22) durch zwei übereinander liegende Mischbereiche gebildet ist, wobei

- ein tiefer liegender Mischbereich einen ersten Anteil $AT_1$ von Mikrospiegeln enthält, die aus dem ersten genannten Betrachtungswinkel im Glanzwinkel stehen, und einen zweiten Anteil $AT_2$ von Mikrospiegeln enthält, die aus dem dritten genannte Betrachtungswinkel im Glanzwinkel stehen, und
- ein höher liegender Mischbereich einen ersten Anteil $AH_1$ von Mikrospiegeln enthält, die aus dem zweiten genannten Betrachtungswinkel im Glanzwinkel stehen, und einen zweiten Anteil $AH_2$ von Mikrospiegeln enthält, die aus dem dritten genannten Betrachtungswinkel im Glanzwinkel stehen,
- so dass der Farbeindruck des Mischbereichs aus dem ersten Betrachtungswinkel durch die erste Farbbeschichtung (46) und den Anteil $AT_1$ von Mikrospiegeln des tiefer liegenden Mischbereichs bestimmt wird, aus dem zweiten Betrachtungswinkel durch die zweite Farbbeschichtung (56) und den Anteil $AH_1$ von Mikrospiegeln des höher liegenden Mischbereichs bestimmt wird, und aus dem dritten Betrachtungswinkel durch eine Kombination der ersten Farbbeschichtung (46) und den Anteil $AT_2$ von Mikrospiegeln des tiefer liegenden Mischbereichs mit der zweiten Farbbeschichtung (56) und dem Anteil $AH_2$ von Mikrospiegeln des höher liegenden Mischbereichs bestimmt wird, und dadurch eine Trikolorbereich (22) bildet.

6. Sicherheitselement nach Anspruch 5, **dadurch gekennzeichnet, dass** die Anteile $AT_1$, $AT_2$, $AH_1$, $AH_2$, die erste und zweite Farbbeschichtung (46, 56), und die Rasterung der zweiten Farbbeschichtung (56) aufeinander abgestimmt sind, um ein vorgegebenes Helligkeitsverhältnis der Farbeindrücke aus dem ersten, zweiten und dritten Betrachtungswinkel zu erzeugen, insbesondere, dass die Helligkeiten der Farbeindrücke aus dem ersten, zweiten und dritten Betrachtungswinkel im Wesentlichen gleich sind.

7. Sicherheitselement nach wenigstens einem der Ansprüche 1 bis 6,
**dadurch gekennzeichnet, dass** die Abmessungen der Rasterelemente (72) und/oder Rasterzwischenräume (74) in einer oder beiden lateralen Richtungen unterhalb von 120 $\mu$m, vorzugsweise zwischen 20 $\mu$m und 100 $\mu$m, insbesondere zwischen 20 $\mu$m und 60 $\mu$m liegen.

8. Sicherheitselement nach wenigstens einem der Ansprüche 1 bis 7,
**dadurch gekennzeichnet, dass** das Raster (70) der zweiten Farbbeschichtung (56) mit einer konstanter Flächendeckung durch die Rasterelemente (72) ausgebildet ist, welche zweckmäßig zwischen 30% und 70%, vorzugsweise zwischen 40% und 60%, insbesondere bei etwa 50% liegt.

9. Sicherheitselement nach wenigstens einem der Ansprüche 1 bis 7,
**dadurch gekennzeichnet, dass** das Raster (70) der zweiten Farbbeschichtung (56) mit einer ortsabhängig variierenden Flächendeckung durch die Rasterelemente (72) ausgebildet ist, vorzugsweise dass die Flächendeckung in einer Raumrichtung kontinuierlich zunimmt oder kontinuierlich abnimmt, oder bis zu einem Maximalwert kontinuierlich zunimmt und dann kontinuierlich abnimmt, oder bis zu einem Minimalwert kontinuierlich abnimmt und dann kontinuierlich zunimmt.

10. Sicherheitselement nach wenigstens einem der Ansprüche 1 bis 9,
**dadurch gekennzeichnet, dass** die zweite Farbbeschichtung (56) in dem Merkmalsbereich auch Teilbereiche enthält, die laterale Abmessungen von mehr als 140 $\mu$m aufweisen, und/oder dass die zweite Farbbeschichtung in dem Merkmalsbereich Aussparungen aufweist, die laterale Abmessungen von mehr als 140 $\mu$m aufweisen.

11. Sicherheitselement nach wenigstens einem der Ansprüche 1 bis 10,
**dadurch gekennzeichnet, dass**

die erste Farbbeschichtung (46) der tiefer liegenden Reliefstruktur (44) opak ist und/oder dass die erste Farbbeschichtung (46) der tiefer liegenden Reliefstruktur (44) im Überlappungsbereich vollflächig ausgebildet ist; und/oder
die erste und/oder zweite Farbbeschichtung (46, 56) reflektierende Farbbeschichtungen sind, insbesondere durch Metallisierungen, Dünnschichtaufbauten, durch mit einer Metallisierung hinterlegte lasierende Farben, durch Lumineszenzfarben mit einer metallischen Verspiegelung, durch Strukturfarben und/oder durch Nanopartikelfarben gebildet sind.

12. Sicherheitselement nach wenigstens einem der Ansprüche 1 bis 11,
**dadurch gekennzeichnet, dass** die Ausbildung der höher liegenden Reliefstruktur (54), insbesondere die Ausrichtung der Mikrospiegel der höher liegenden Mikrospiegelanordnung, und/oder die Ausbildung der tiefer liegenden Reliefstruktur (44), insbesondere die Ausrichtung der Mikrospiegel der tiefer liegenden Mikrospiegelanordnung, ortsabhängig variiert um ein jeweils vorgegebenes Motiv, insbesondere ein dreidimensional wirkendes Motiv oder ein Bewegungsmotiv, zu erzeugen.

13. Sicherheitselement nach wenigstens einem der Ansprüche 1 bis 12,
**dadurch gekennzeichnet, dass** der Merkmalsbereich mehrere Trikolorbereiche (82, 92) enthält, insbesondere mehrere Trikolorbereiche mit gleichem Farbwechsel oder mehrere Trikolorbereiche mit unterschiedlichen Farbwechseln beim Wechsel der Betrachtungsrichtungen.

14. Datenträger mit einem optisch variablen Sicherheitselement nach wenigstens einem der Ansprüche 1 bis 13.

15. Verfahren zum Herstellen eines optisch variablen Sicherheitselements, bei dem

- ein Träger (32) bereitgestellt wird, dessen Flächenausdehnung eine Ebene und eine darauf senkrecht stehende z-Achse definiert,
- der Träger (32) mit einem mehrfarbigen reflektiven Flächenbereich versehen wird, der zwei Reliefstrukturen (44,54) enthält, die in z-Richtung in unterschiedlichen Höhenstufen angeordnet sind, und eine tiefer liegende Reliefstruktur (44) und eine höher liegende Reliefstruktur (54) bilden,
- die tiefer liegende Reliefstruktur (44) mit einer dem Reliefverlauf folgenden ersten Farbbeschichtung (46) und die die höher liegende Reliefstruktur (54) mit einer dem Reliefverlauf folgenden zweiten Farbbeschichtung (56) versehen wird, wobei die Farbbeschichtungen (46, 56) einen unterschiedlichen Farbeindruck erzeugen,
- die beiden Reliefstrukturen (44, 54) in einem Merkmalsbereich überlappend ausgebildet werden,
- die zweite Farbbeschichtung (56) in dem Merkmalsbereich zumindest bereichsweise als regelmäßiges oder unregelmäßiges Raster (70) mit Rasterelementen (72) und Rasterzwischenräumen (74) ausgebildet wird,
- das Raster (70) mit Abmessungen der Rasterelemente (72) und/oder der Rasterzwischenräume (74) zumindest in einer Richtung unterhalb von 140 $\mu$m ausgebildet wird, so dass im Merkmalsbereich unter zumindest einigen Betrachtungswinkeln die erste Farbbeschichtung (46) durch die Rasterzwischenräume der zweiten Farbbeschichtung (56) in Erscheinung tritt, und
- der Merkmalsbereich mit zumindest einem Trikolorbereich (22) ausgebildet wird, der aus einem ersten Betrachtungswinkel (60-C) mit dem Farbeindruck der ersten Farbbeschichtung (46), aus einem zweiten Betrachtungswinkel (60-A) mit dem Farbeindruck der zweiten Farbbeschichtung (60-B), und aus einem dritten Betrachtungswinkel (60-B) mit einem Mischfarbeindruck erscheint, der sich durch additive Farbmischung der Farbeindrücke der ersten und zweiten Farbbeschichtung (46, 56) ergibt.

**Claims**

1. Optically variable security element (30) for protecting valuable objects the surface extent of which defines a perpendicular z-axis, having a multi-coloured reflective surface region, wherein

   - the multi-coloured reflective surface region contains two relief structures (44, 54), which are arranged at different height levels in the z-direction and form a lower relief structure (44) and a higher relief structure (54),
   - the lower relief structure (44) is provided with a first colour coating (46) following the relief profile and the higher relief structure (54) is provided with a second colour coating (56) following the relief profile, wherein the colour coatings (46, 56) produce a different colour impression,
   - the two relief structures (44, 54) overlap in a feature region,
   - the second colour coating (56) is designed in the feature region at least in part as a regular or irregular grid (70) with grid elements (72) and grid intermediate spaces (74),
   - the dimensions of the grid elements (72) and/or grid intermediate spaces (74) are smaller than 140 $\mu$m at least in one direction, so that, at at least some viewing angles, the first colour coating (46) appears through the grid intermediate spaces (74) of the second colour coating (56) in the feature region, and
   - the feature region contains at least one tricolour region (22), which appears at a first viewing angle (60-C) with the colour impression of the first colour coating (46), at a second viewing angle (60-A) with the colour impression of the second colour coating (56), and at a third viewing angle (60-B) with a mixed-colour impression, which results from additive colour mixing of the colour impressions of the first and second colour coatings (46, 56).

2. Security element according to Claim 1, **characterized in that** the higher relief structure (54) and/or the lower relief structure (44) are formed by micromirror arrangements with directionally reflective micromirrors, in particular with mirrors having a non-diffractive effect, and preferably with plane mirrors, concave mirrors and/or Fresnel-like mirrors.

3. Security element according to Claim 2, **characterized in that** the higher micromirror arrangement (54) and the lower micromirror arrangement (44) contain mixing regions with at least two micromirror orientations in which a respective defined proportion of the micromirrors is aligned in each of the micromirror orientations.

4. Security element according to Claim 3, **characterized in that** the mixing regions contain at least in partial regions exactly two micromirror orientations in which a respective defined proportion of the micromirrors is aligned in each of the two micromirror orientations; and/or
   the mixing regions of the higher micromirror arrangement (54) and the lower micromirror arrangement (44) are arranged at least in part on top of one another.

5. Security element according to Claim 4, **characterized in that** at least one tricolour region (22) is formed by two mixing regions lying on top of one another, wherein

   - a lower mixing region contains a first proportion $AT_1$ of micromirrors, which are in the glancing angle from the first viewing angle mentioned, and a second proportion $AT_2$ of micromirrors, which are in the glancing angle from the third viewing angle mentioned, and
   - a higher mixing region contains a first proportion $AH_1$ of micromirrors, which are in the glancing angle from the second viewing angle mentioned, and a second proportion $AH_2$ of micromirrors, which are in the glancing angle from the third viewing angle mentioned,
   - so that the colour impression of the mixing region from the first viewing angle is determined by the first colour coating (46) and the proportion $AT_1$ of micromirrors of the lower mixing region, from the second viewing angle is determined by the second colour coating (56) and the proportion $AH_1$ of micromirrors of the higher mixing region, and from the third viewing angle is determined by a combination of the first colour coating (46) and the proportion $AT_2$ of micromirrors of the lower mixing region with the second colour coating (56) and the proportion $AH_2$ of micromirrors of the higher mixing region, and thus forms a tricolour region (22).

6. Security element according to Claim 5, **characterized in that** the proportions $AT_1$, $AT_2$, $AH_1$, $AH_2$, the first and second colour coatings (46, 56), and the grid of the second colour coating (56) are matched to one another in order to produce a specified brightness ratio of the colour impressions from the first, second and third viewing angles, in particular that the brightness of the colour impressions from the first, second and third viewing angles are substantially the same.

7. Security element according to at least one of Claims 1 to 6, **characterized in that** the dimensions of the grid elements (72) and/or grid intermediate spaces (74) are smaller than 120 $\mu$m in one or both lateral directions, preferably between 20 $\mu$m and 100 $\mu$m, in particular between 20 $\mu$m and 60 $\mu$m.

8. Security element according to at least one of Claims 1 to 7, **characterized in that** the grid (70) of the second colour coating (56) is formed with a constant surface coverage by the grid elements (72) which is conveniently between 30% and 70%, preferably between 40% and 60%, in particular about 50%.

9. Security element according to at least one of Claims 1 to 7, **characterized in that** the grid (70) of the second colour coating (56) is formed with a location-dependently varying surface coverage by the grid elements (72), preferably that the surface coverage increases continuously or decreases continuously in a spatial direction, or increases continuously to a maximum value and then decreases continuously, or decreases continuously to a minimum value and then increases continuously.

10. Security element according to at least one of Claims 1 to 9, **characterized in that** the second colour coating (56) also contains partial regions in the feature region that have lateral dimensions of more than 140 $\mu$m, and/or that the second colour coating has cutouts in the feature region having lateral dimensions of more than 140 $\mu$m.

11. Security element according to at least one of Claims 1 to 10, **characterized in that**

the first colour coating (46) of the lower relief structure (44) is opaque and/or **in that** the first colour coating (46) of the lower relief structure (44) is formed over the full surface of the overlap region; and/or
the first and/or second colour coatings (46, 56) are reflective colour coatings, in particular formed by metallization, thin-film structures, by translucent inks backed by a metallization, by luminescent inks with metallic reflection, by structure inks and/or by nanoparticle inks.

12. Security element according to at least one of Claims 1 to 11, **characterized in that** the design of the higher relief structure (54), in particular the alignment of the micromirrors of the higher micromirror arrangement, and/or the design of the lower relief structure (44), in particular the alignment of the micromirrors of the lower micromirror arrangement, varies location-dependently in order to produce a respective specified motif, in particular a motif with a three-dimensional effect or a movement motif.

13. Security element according to at least one of Claims 1 to 12, **characterized in that** the feature region contains a plurality of tricolour regions (82, 92), in particular a plurality of tricolour regions with the same colour change or a plurality of tricolour regions with different colour changes when changing the viewing directions.

14. Data carrier comprising an optically variable security element according to at least one of Claims 1 to 13.

15. Method for producing an optically variable security element, wherein

- a carrier (32) is provided the surface extent of which defines a plane and a perpendicular z-axis,
- the carrier (32) is provided with a multi-colour reflective surface region containing two relief structures (44, 54), which are arranged at different height levels in the z-direction and form a lower relief structure (44) and a higher relief structure (54),
- the lower relief structure (44) is provided with a first colour coating (46) following the relief profile and the higher relief structure (54) is provided with a second colour coating (56) following the relief profile, wherein the colour coatings (46, 56) produce a different colour impression,
- the two relief structures (44, 54) are embodied so as to overlap in a feature region,
- the second colour coating (56) is designed in the feature region at least in part as a regular or irregular grid (70) with grid elements (72) and grid intermediate spaces (74),
- the grid (70) is formed with dimensions of the grid elements (72) and/or the grid intermediate spaces (74) of less than 140 $\mu$m at least in one direction, so that, at at least some viewing angles, the first colour coating (46) appears through the grid intermediate spaces of the second colour coating (56) in the feature region, and

- the feature region is formed with at least one tricolour region (22), which appears at a first viewing angle (60-C) with the colour impression of the first colour coating (46), at a second viewing angle (60-A) with the colour impression of the second colour coating (60-B), and at a third viewing angle (60-B) with a mixed-colour impression, which results from additive colour mixing of the colour impressions of the first and second colour coatings (46, 56).

**Revendications**

1. Élément de sécurité optiquement variable (30) destiné à la protection d'objets de valeur, dont la dimension de surface définit un axe z qui lui est perpendiculaire, doté d'une zone de surface multicolore réfléchissante, dans lequel

    - la zone de surface multicolore réfléchissante contient deux structures en relief (44, 54) qui sont agencées à des niveaux de hauteur différents dans la direction z et forment une structure en relief située plus bas (44) et une structure en relief située plus haut (54),
    - la structure en relief située plus bas (44) est dotée d'un premier revêtement coloré (46) qui suit le tracé du relief et la structure en relief située plus haut (54) est dotée d'un deuxième revêtement coloré (56) qui suit le tracé du relief, les revêtements colorés (46, 56) produisant une impression de couleur différente,
    - les deux structures en relief (44, 54) se chevauchant dans une zone de caractéristique,
    - le deuxième revêtement coloré (56) est réalisé dans la zone de caractéristique au moins par zones sous la forme d'une trame régulière ou irrégulière (70) comportant des éléments de trame (72) et des interstices de trame (74),
    - les dimensions des éléments de trame (72) et/ou des interstices de trame (74) sont inférieures à 140 $\mu$m au moins dans une direction, de telle sorte que dans la zone de caractéristique, le premier revêtement coloré (46) apparaît à travers les interstices de trame (74) du deuxième revêtement coloré (56) au moins selon certains angles d'observation, et
    - la zone de caractéristique contient au moins une zone tricolore (22) qui apparaît selon un premier angle d'observation (60-C) avec l'impression de couleur du premier revêtement coloré (46), selon un deuxième angle d'observation (60-A) avec l'impression de couleur du deuxième revêtement coloré (56), et selon un troisième angle d'observation (60-B) avec une impression de couleur mélangée qui résulte du mélange additif de couleurs des impressions de couleur des premier et deuxième revêtements colorés (46, 56).

2. Élément de sécurité selon la revendication 1, **caractérisé en ce que** la structure en relief située plus haut (54) et/ou la structure en relief située plus bas (44) sont formées par des agencements de micromiroirs comprenant des micromiroirs à réflexion dirigée, notamment avec des miroirs à effet non diffractant, et comprenant de préférence des miroirs plans, des miroirs concaves et/ou des miroirs de type Fresnel.

3. Élément de sécurité selon la revendication 2, **caractérisé en ce que** l'agencement de micromiroirs situé plus haut (54) et l'agencement de micromiroirs situé plus bas (44) contiennent des zones de mélange présentant au moins deux orientations de micromiroirs, dans chacune desquelles une proportion déterminée des micromiroirs est orientée dans chacune des orientations de micromiroirs.

4. Élément de sécurité selon la revendication 3, **caractérisé en ce que** les zones de mélange contiennent, au moins dans des zones partielles, exactement deux orientations de micromiroirs, dans chacune desquelles une proportion déterminée des micromiroirs est orientée dans chacune des deux orientations de micromiroirs ; et/ou les zones de mélange de l'agencement de micromiroirs situé plus haut (54) et de l'agencement de micromiroirs situé plus bas (44) sont au moins partiellement agencées l'une au-dessus de l'autre.

5. Élément de sécurité selon la revendication 4, **caractérisé en ce qu**'au moins une zone tricolore (22) est formée par deux zones de mélange superposées, dans lequel

    - une zone de mélange située plus bas contient une première proportion $AT_1$ de micromiroirs qui sont positionnés selon ledit premier angle d'observation sous l'angle rasant, et une deuxième proportion $AT_2$ de micromiroirs qui sont positionnés selon ledit troisième angle d'observation sous l'angle rasant, et
    - une zone de mélange située plus bas contient une première proportion $AH_1$ de micromiroirs qui sont positionnés selon ledit premier angle d'observation sous l'angle rasant, et une deuxième proportion $AH_2$ de micromiroirs qui sont positionnés selon ledit troisième angle d'observation sous l'angle rasant,
    - de telle sorte que l'impression de couleur de la zone de mélange soit déterminée, selon le premier angle d'observation, par le premier revêtement coloré (46) et par la proportion $AT_1$ de micromiroirs de la zone de mélange située plus bas et, selon le deuxième angle d'observation, par le deuxième revêtement coloré (56) et par la proportion $AH_1$ de micromiroirs de la zone de mélange située plus haut, et selon le troisième angle d'observation, par une combinaison du premier revêtement coloré (46) et de la proportion $AT_2$ de micromiroirs de la zone de mélange située plus bas avec le deuxième revêtement coloré (56) et la proportion $AH_2$ de micromiroirs de la zone de mélange située plus haut, formant ainsi une zone tricolore (22).

6. Élément de sécurité selon la revendication 5, **caractérisé en ce que** les proportions $AT_1$, $AT_2$, $AH_1$, $AH_2$, les premier et deuxième revêtements colorés (46, 56) et le tramage du deuxième revêtement coloré (56) sont adaptés les uns aux autres pour produire un rapport de luminosité prédéterminé des impressions de couleur selon les premier, deuxième et troisième angles d'observation, notamment **en ce que** les luminosités des impressions de couleur selon les premier, deuxième et troisième angles d'observation sont sensiblement identiques.

7. Élément de sécurité selon au moins l'une quelconque des revendications 1 à 6, **caractérisé en ce que** les dimensions des éléments de trame (72) et/ou des interstices de trame (74) dans une ou les deux directions latérales sont inférieures à 120 $\mu$m, de préférence comprises entre 20 $\mu$m et 100 $\mu$m, notamment entre 20 $\mu$m et 60 $\mu$m.

8. Élément de sécurité selon au moins l'une quelconque des revendications 1 à 7, **caractérisé en ce que** la trame (70) du deuxième revêtement coloré (56) est réalisée de façon à présenter un taux de couverture de surface constant par les éléments de trame (72), qui est avantageusement compris entre 30% et 70%, de préférence entre 40% et 60%, en particulier d'environ 50%.

9. Élément de sécurité selon au moins l'une quelconque des revendications 1 à 7, **caractérisé en ce que** la trame (70) du deuxième revêtement coloré (56) est réalisée de façon à présenter un taux de couverture de surface par les éléments de trame (72) qui varie en fonction de l'emplacement, de préférence **en ce que** le taux de couverture de surface augmente ou diminue de façon continue dans une direction spatiale, ou augmente de façon continue jusqu'à une valeur maximale et diminue ensuite de façon continue, ou diminue de façon continue jusqu'à une valeur minimale et augmente ensuite de façon continue.

10. Élément de sécurité selon au moins l'une quelconque des revendications 1 à 9, **caractérisé en ce que** le deuxième revêtement coloré (56) contient également dans la zone de caractéristique des zones partielles qui présentent des dimensions latérales supérieures à 140 $\mu$m, et/ou **en ce que** le deuxième revêtement coloré présente dans la zone de caractéristique des évidements qui présentent des dimensions latérales supérieures à 140 $\mu$m.

11. Élément de sécurité selon au moins l'une quelconque des revendications 1 à 10, **caractérisé en ce que**

le premier revêtement coloré (46) de la structure en relief située plus bas (44) est opaque et/ou **en ce que** le premier revêtement coloré (46) de la structure en relief située plus bas (44) est réalisé sur toute la surface dans la zone de chevauchement ; et/ou
le premier et/ou le deuxième revêtement coloré (46, 56) sont des revêtements colorés réfléchissants, formés en particulier par des métallisations, des structures en couches minces, par des encres glaçantes revêtues d'une métallisation, par des encres luminescentes dotées d'un revêtement de miroir métallique, par des encres de structure et/ou par des encres à nanoparticules.

12. Élément de sécurité selon au moins l'une quelconque des revendications 1 à 11, **caractérisé en ce que** la réalisation de la structure en relief située plus haut (54), notamment l'orientation des micromiroirs de l'agencement de micromiroirs situé plus haut et/ou la réalisation de la structure en relief située plus bas (44), notamment l'orientation des micromiroirs de l'agencement de micromiroirs situé plus bas, varie en fonction de l'emplacement pour produire un motif respectif prédéfini, notamment un motif à effet tridimensionnel ou un motif de mouvement.

13. Élément de sécurité selon au moins l'une quelconque des revendications 1 à 12, **caractérisé en ce que** la zone de caractéristique contient plusieurs zones tricolores (82, 92), notamment plusieurs zones tricolores avec le même changement de couleur ou plusieurs zones tricolores avec des changements de couleur différents lors d'un changement de direction d'observation.

14. Support de données comportant un élément de sécurité optiquement variable selon au moins l'une quelconque des revendications 1 à 13.

15. Procédé de fabrication d'un élément de sécurité optiquement variable, dans lequel

- il est fourni un support (32) dont la dimension de surface définit un plan et un axe z qui lui est perpendiculaire,
- le support (32) est doté d'une zone de surface multicolore réfléchissante contenant deux structures en relief (44, 54) qui sont agencées à des niveaux de hauteur différents dans la direction z et forment une structure en relief située plus bas (44) et une structure en relief située plus haut (54),
- la structure en relief située plus bas (44) est dotée d'un premier revêtement coloré (46) qui suit le tracé du relief et la structure en relief située plus haut (54) est dotée d'un deuxième revêtement coloré (56) qui suit le tracé du relief, les revêtements colorés (46, 56) produisant une impression de couleur différente,
- les deux structures en relief (44, 54) sont formées de manière à se chevaucher dans une zone de caractéristique,
- le deuxième revêtement coloré (56) est réalisé, dans la zone de caractéristique, au moins par zones sous la forme d'une trame régulière ou irrégulière (70) comportant des éléments de trame (72) et des interstices de trame (74),
- la trame (70) est réalisée avec des dimensions des éléments de trame (72) et/ou des interstices de trame (74) qui sont inférieures à 140 $\mu$m au moins dans une direction, de telle sorte que dans la zone de caractéristique, le premier revêtement coloré (46) apparaît à travers les interstices de trame du deuxième revêtement coloré (56) au moins selon certains angles d'observation, et
- la zone de caractéristique est réalisée de façon à comporter au moins une zone tricolore (22) qui apparaît selon un premier angle d'observation (60-C) avec l'impression de couleur du premier revêtement coloré (46), selon un deuxième angle d'observation (60-A) avec l'impression de couleur du deuxième revêtement coloré (60-B), et selon un troisième angle d'observation (60-B) avec une impression de couleur mélangée qui résulte du mélange additif de couleurs des impressions de couleur des premier et deuxième revêtements colorés (46, 56).

Fig. 1

Fig. 2

Fig. 3

80

(a)

| | |
|---|---|
| 80 : 20 | — 82-0 |
| 65 : 35 | |
| 50 : 50 | — 82-M |
| 35 : 65 | |
| 20 : 80 | — 82-U |

82

70

(b)

−20°/ 0° /+20°

| | |
|---|---|
| 67 / 34 / 0 | |
| 67 / 34 / 0 | |
| 67 / 34 / 0 | — 82 |
| 67 / 34 / 0 | |
| 67 / 34 / 0 | |

54

(c)

−20°/ 0° /+20°

| | |
|---|---|
| 0 / 34 / 67 | |
| 0 / 34 / 67 | |
| 0 / 34 / 67 | — 82 |
| 0 / 34 / 67 | |
| 0 / 34 / 67 | |

44

−20°  ⟵  0°  ⟶  +20°

60-A

(d)

| |
|---|
| — 82-0 |
| |
| — 82-M |
| |
| — 82-U |

80

60-B

(e)

| |
|---|
| — 82-0 |
| — 82-M |
| — 82-U |

80

60-C

(f)

| |
|---|
| — 82-0 |
| — 82-M |
| — 82-U |

80

# Fig. 4

Fig. 5

**Fig. 6**

-20°          0°          +20°

118
112

118
114

116

(a)      110        (b)      110        (c)      110

# Fig. 7

-20°          0°          +20°

60-A          60-B          60-C

122
124

122
124

(a)      120        (b)      120        (c)      120

# Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3415964 A1
- US 20190152251 A1
- EP 3216620 A1
- CH 691750 A5